# EUROPEAN PATENT APPLICATION

(11) **EP 4 358 350 A1**
(43) Date of publication of application: **24.04.2024**
(21) Application number: 22824288.9
(22) Date of filing: 16.06.2022
(51) Int. Cl.: H02J 7/00, H01M 10/42, H01M 10/44

(54) **POWER SUPPLY SYSTEM, WORKING SYSTEM, CHARGING SYSTEM, AND WORKING METHOD**

(30) Priority: 16.06.2021 CN 202110667691
(71) Applicant: Positec Power Tools (Suzhou) Co., Ltd., Suzhou, Jiangsu 215123 (CN)
(72) Inventor: LV, Shaofeng, Suzhou, Jiangsu 215123 (CN)
(74) Representative: Kilburn & Strode LLP
(86) International application number: PCT/CN2022/099185
(87) International publication number: WO 2022/262815

(57) **Abstract**

This application provides a power supply system, a working system, a charging system, and a working method. The power supply system includes: a battery pack system, including a plurality of groups of battery packs, configured to alternately supply power to an electric tool system, where the electric tool system includes one or more electric tools; and a charging system, configured to charge a battery pack in an idle state in the battery pack system in a working process of the electric tool system, where a charging speed of the charging system to the battery pack system is not less than a discharging speed of the battery pack system to the electric tool system. Uninterrupted work of the electric tool system can be achieved by using the power supply system provided in this application.

## Description

### BACKGROUND

### Technical Field

This application relates to the field of electric tools, and more specifically, to a power supply system, a working system, a charging system, and a working method.

### Related Art

In some operating scenarios, for example, an outdoor operating scenario, a power tool often needs to be used to work continuously for a long time. To achieve uninterrupted work of the power tool, selection of a power source is primary consideration.

Generally, a power tool that use fuel as a power source (hereinafter referred to as a fuel-powered tool, for example, a gasoline-powered tool) can meet long-term uninterrupted work requirements. However, a main problem of the fuel-powered tool is that exhaust gas emitted by the fuel-powered tool may pollute the environment, and noise of the fuel-powered tool during work may cause noise pollution to a surrounding environment.

An electric tool is environmentally friendly and clean, and produce relatively low noise compared with the fuel-powered tool. Therefore, the electric tool is becoming increasingly popular among power tool users. However, a main problem of the electric tool is that a run time that can be provided by the battery pack is relatively short. The problem is particularly prominent in an outdoor scenario or a scenario without a mains socket.

Based on this, in the field of power tools, and particularly, in the field of commercial power tools that require a higher rated power, the fuel-powered tool is still a first choice for the power tool users despite obvious shortcomings.

### SUMMARY

In view of this, this application provides a power supply system, a working system, a charging system, and a working method, which can resolve a power supply problem in an electric tool system to some extent, and expand application scenarios of an electric tool.

According to a first aspect, a power supply system is provided, including: a battery pack system, including a plurality of groups of battery packs, configured to alternately supply power to an electric tool system, where the electric tool system includes a plurality of garden electric tools; and a portable energy storage charging system, where the charging system includes: an input interface, configured to receive an input power, the input power being a direct current power or an alternating current power; an electric energy storage portion, including one or more battery groups and configured to charge the one or more battery groups by using the direct current power or the alternating current power, to store an electric energy; a first power conversion portion, electrically connected to the electric energy storage portion and configured to convert the electric energy stored in the electric energy storage portion into a first charging power; an output interface, electrically connected to the first power conversion portion and configured to output the first charging power; and a plurality of charging bins, electrically connected to the output interface, where the charging bin is configured to place the battery pack, and charge the battery pack by using the first charging power outputted by the output interface, wherein the plurality of charging bins are configured to charge a battery pack in an idle state in the battery pack system in a working process of the electric tool system, so that before one group of battery packs of the plurality of groups of battery packs completes discharging to the electric tool system, at least one group of battery packs of the plurality of groups of battery packs is charged to the fully charged state.

According to a second aspect, a power supply system is provided. The power supply system includes: a battery pack system, including a plurality of groups of battery packs, configured to alternately supply power to an electric tool system, where the electric tool system includes one or more electric tools; and a charging system, configured to charge a battery pack in an idle state in the battery pack system in a working process of the electric tool system, where a charging speed of the charging system to the battery pack system is not less than a discharging speed of the battery pack system to the electric tool system.

According to a third aspect, a power supply system is provided, including: an electric tool system, including a plurality of high-power electric tools, where the high-power electric tool is an electric tool whose rated power is greater than or equal to 1 KW and less than or equal to 3 KW; a battery pack system, where a quantity of battery packs in the battery pack system is not less than twice a quantity of battery packs required when the electric tool system works; and a portable charging system, configured to charge a battery pack in an idle state in the battery pack system in a working process of the electric tool system, where a charging speed of the charging system to the battery pack is not less than a maximum discharging speed of the battery pack to the electric tool system.

According to a fourth aspect, a power supply system is provided, including: an electric tool system, including a plurality of garden electric tools; a battery pack system, including two groups of battery packs and configured to alternately supply power to the electric tool system; and a portable charging system, where the portable charging system can simultaneously supply power to one of the two groups of battery packs, and a charging speed of the charging system to the one group of battery packs is not less than a maximum discharging speed of the one group of battery packs to the electric tool system.

According to a fifth aspect, a working system is provided, including: an electric tool system; and the power supply system according to any one of the first aspect to the third aspect.

According to a sixth aspect, a charging system is provided. The charging system is a portable charging system suitable for charging a battery pack of a high-power electric tool, where the high-power electric tool is an electric tool whose rated power is greater than or equal to 1 KW and less than or equal to 3 KW, and the charging system includes: an electric energy storage portion, configured to store an electric energy; a first power conversion portion, electrically connected to the electric energy storage portion and configured to convert the electric energy stored in the electric energy storage portion into a first charging power; an output interface, electrically connected to the first power conversion portion and configured to output the first charging power, to charge the battery pack, where a configuration of a charging power of the output interface enables a charging speed of the output interface to the battery pack to be not less than a discharging speed of the battery pack to the high-power electric tool.

According to a seventh aspect, a working method is provided, including: in a working process of an electric tool system, alternately supplying power to the electric tool system by using a plurality of groups of battery packs in a battery pack system; charging, by using a charging system, a battery pack in an idle state in the battery pack system in a working process of the electric tool system, where a charging speed of the charging system to the battery pack system is not less than a discharging speed of the battery pack system to the electric tool system.

According to an eighth aspect, a working method is provided, including: trimming a first garden by using a plurality of garden electric tools, where the plurality of garden electric tools are powered by a first group of battery packs in a process of trimming the first garden; trimming, after completing trimming the first garden, a second garden by using the plurality of garden electric tools, where the plurality of garden electric tools are powered by a second group of battery packs in a process of trimming the second garden; and charging the first group of battery packs by using a charging system, so that before trimming on the second garden is completed, the first group of battery packs is charged to a fully charged state.

The present embodiments provide a power supply system, a working system, and a working method.

The first aspect of this application provides a power supply system, including: a battery pack system, including a plurality of groups of battery packs, configured to alternately supply power to an electric tool system, where the electric tool system includes a plurality of garden electric tools; and a portable energy storage charging system, where the charging system includes: an electric energy storage portion, including one or more battery cells, where the battery cell is configured to store an electric energy; an input interface, connected to the one or more battery cells, where the input interface is configured to receive an input power for charging the battery cell, and the input power is a direct current power or an alternating current power; a first power conversion portion, electrically connected to the electric energy storage portion and configured to perform power conversion on the electric energy stored in the electric energy storage portion, to output a first charging power; an output interface, electrically connected to the first power conversion portion and configured to output electric energy at the first charging power; and a plurality of charging bins, electrically connected to the output interface, where the charging bin is configured to place the battery pack, and charge the battery pack by using the electric energy outputted by the output interface, where an average charging power of a single charging bin to a single battery pack is not less than an average discharging power of the single battery pack to the electric tool, the average charging power is a charging power required within an effective charging time during which an electric energy of the battery pack is charged from an empty state to a fully charged state, and the average discharging power is a discharging power required within an effective discharging time during which an electric energy of the battery pack is discharged from the fully charged state to the empty state.

In an embodiment, a maximum continuous charging power of the charging bin to the battery pack is not less than 2.4 KW. Preferably, the maximum continuous charging power of the charging bin to the battery pack is not less than 3 KW.

In an embodiment, an average charging power required for charging the battery pack from the empty state to the fully charged state within a continuous charging time is not less than an average discharging power required for discharging to the battery pack from the fully charged state to the empty state with a continuous discharging time.

In an embodiment, the continuous charging time required for charging the battery pack from the empty state to the fully charged state is not greater than the continuous discharging time required for discharging to the battery pack from the fully charged state to the empty state.

In an embodiment, a configuration of an internal resistance of a single battery cell of the battery pack enables a maximum continuous charging rate of the battery pack to be not less than a maximum continuous discharging rate of the battery pack.

In an embodiment, the configuration of the internal resistance of the single battery cell of the battery pack enables the maximum continuous charging rate and/or the maximum continuous discharging rate of the battery pack to be not less than 3C, and a configuration performed by the charging bin on a charging power of the battery pack enables a charging time of the battery pack to be not greater than 20 minutes;

Preferably, the configuration of the internal resistance of the single battery cell of the battery pack enables the maximum continuous charging rate and/or the maximum continuous discharging rate of the battery pack to be not less than 4C, and the configuration performed by the charging bin on the charging power of the battery pack enables the charging time of the battery pack to be not greater than 15 minutes; and

Preferably, the configuration of the internal resistance of the single battery cell of the battery pack enables the maximum continuous charging rate and/or the maximum continuous discharging rate of the battery pack to be not less than 5C, and the configuration performed by the charging bin on the charging power of the battery pack enables the charging time of the battery pack to be not greater than 12 minutes.

In an embodiment, an electric energy carried by the single battery pack is not greater than one eighth of an electric energy storable by the electric energy storage portion.

In an embodiment, the electric energy storable by the electric energy storage portion is not less than 5 KWH.

In an embodiment, a capacity of the battery pack is not less than 500 WH.

In an embodiment, a capacity of the single battery cell of the battery pack is not less than 10 Ah, and a quantity of single battery cells of the battery pack is not greater than 15.

In an embodiment, a charging rate and a discharging rate of a single battery cell of the electric energy storage portion are respectively less than a charging rate and a discharging rate of the single battery cell of the battery pack.

In an embodiment, both the charging rate and the discharging rate of the single battery cell of the electric energy storage portion are not greater than 1.5C.

In an embodiment, a maximum quantity of charging/discharging cycles of the battery pack is not less than 3000; and preferably, the maximum quantity of charging/discharging cycles of the battery pack is not less than 5000.

In an embodiment, the charging bin and/or the battery pack further include(s) a heating device and/or a heat dissipation device, configured to perform temperature control on the battery pack, to enable the battery pack to be continuously charged or discharged.

In an embodiment, the plurality of charging bins are configured to charge a battery pack in an idle state in the battery pack system in a working process of the electric tool system, so that before one group of battery packs of the plurality of groups of battery packs completes discharging to the electric tool system, at least one group of battery packs of the plurality of groups of battery packs is charged to the fully charged state.

In an embodiment, the first power conversion portion is further configured to convert the electric energy stored in the electric energy storage portion into an alternating current power; and the output interface includes a first alternating current output interface, configured to externally output the alternating current power.

In an embodiment, the charging system further includes: a second power conversion portion, electrically connected to the input interface and configured to convert the input power into a second charging power, to charge the electric energy storage portion.

In an embodiment, the input interface is configured to receive the input power from one or more of the following devices: a mains socket, a direct current charging pile, an alternating current charging pile, a mobile power supply vehicle, and an energy storage cabinet.

In an embodiment, a configuration of the electric energy storage portion enables the direct current charging pile and/or the alternating current charging pile to charge the electric energy storage portion from the empty state to the fully charged state within one hour.

In an embodiment, a direct charging channel is arranged between the input interface and the electric energy storage portion, and the direct charging channel is configured to: when the input power is a direct current power, charge the electric energy storage portion directly by using the direct current power.

In an embodiment, the charging system further includes: a second alternating current output interface, configured to: when the input power is an alternating current power, externally output the alternating current power.

In an embodiment, the second alternating current output interface is configured to charge the battery pack through a charging machine and/or a charger.

In an embodiment, the first power conversion portion is further configured to convert the electric energy stored in the battery pack into a third charging power, to charge the electric energy storage portion.

In an embodiment, a maximum charging power of the charging system is greater than a limitation of a mains socket to an electric power.

In an embodiment, the power supply system further includes: a back bracket, detachably connected to the battery pack.

In an embodiment, a rated power of the electric tool is greater than or equal to 1 KW and less than or equal to 3 KW.

In an embodiment, a quantity of battery packs in the battery pack system is equal to twice a quantity of battery packs required when the electric tool system works.

The second aspect of this application provides a power supply system, including: a battery pack system, including a plurality of groups of battery packs, configured to alternately supply power to an electric tool system, where the electric tool system includes a plurality of garden electric tools; and a portable energy storage charging system, where the charging system includes: an electric energy storage portion, including one or more battery cells, where the battery cell is configured to store an electric energy; an input interface, connected to the one or more battery cells, where the input interface is configured to receive an input power for charging the battery cell, and the input power is a direct current power or an alternating current power; a first power conversion portion, electrically connected to the electric energy storage portion and configured to perform power conversion on the electric energy stored in the electric energy storage portion, to output a first charging power; an output interface, electrically connected to the first power conversion portion and configured to output electric energy at the first charging power; and a plurality of charging bins, electrically connected to the output interface, where the charging bin is configured to place the battery pack, and charge the battery pack by using the electric energy outputted by the output interface, where a ratio of an average charging power of a single charging bin to a single battery pack to an average discharging power of the single battery pack to the electric tool is in a range of 0.5 to 2, the average charging power is a charging power required within an effective charging time during which an electric energy of the battery pack is charged from an empty state to a fully charged state, and the average discharging power is a discharging power required within an effective discharging time during which an electric energy of the battery pack is discharged from the fully charged state to the empty state.

The third aspect of this application provides a charging system. The charging system includes: an electric energy storage portion, including one or more battery cells, where the battery cell is configured to store an electric energy; an input interface, connected to the one or more battery cells, where the input interface is configured to receive an input power for charging the battery cell, and the input power is a direct current power or an alternating current power; a first power conversion portion, electrically connected to the electric energy storage portion and configured to perform power conversion on the electric energy stored in the electric energy storage portion, to output a first charging power; an output interface, electrically connected to the first power conversion portion and configured to output electric energy at the first charging power; and at least one charging bins, electrically connected to the output interface, where the charging bin is configured to place the battery pack, and charge the battery pack by using the electric energy outputted by the output interface, where the average charging power of the charging bin to the battery pack is not less than 2.4 KW.

In an embodiment, the average charging power of the single charging bin to the single battery pack is not less than 3 KW.

The fourth aspect of this application provides a working system, including: an electric tool system and the power supply system.

The fifth aspect of this application provides a working method, including: trimming a first garden by using a plurality of garden electric tools, where the plurality of garden electric tools are powered by a first group of battery packs in a process of trimming the first garden; trimming, after completing trimming the first garden, a second garden by using the plurality of garden electric tools, where the plurality of garden electric tools are powered by a second group of battery packs in a process of trimming the second garden; and charging the first group of battery packs by using a charging system, so that before trimming on the second garden is completed, the first group of battery packs is charged to a fully charged state, where a maximum continuous charging power of the charging system to the battery pack is not less than a maximum continuous discharging power of the battery pack to the electric tool.

In an embodiment, the charging system is an energy storage charging system, and an electric energy stored in the charging system is configured for supporting the plurality of garden electric tools in completing trimming 10 to 20 gardens.

### BRIEF DESCRIPTION OF THE DRAWINGS

FIG. 1 is a schematic structural diagram of a working system according to an embodiment of this application;
FIG. 2 is a schematic diagram of the working system in FIG. 1;
FIG. 3 is a schematic diagram of an application scenario of the working system in FIG. 2;
FIG. 4 is a schematic diagram of a working method of the working system in FIG. 2;
FIG. 5 is a schematic diagram of a possible mounting method of a battery pack according to an embodiment of this application;
FIG. 6 is a schematic diagram of another possible mounting method of a battery pack according to an embodiment of this application;
FIG. 7 is a schematic structural diagram of a charging system according to an embodiment of this application;
FIG. 8 is a schematic structural diagram of a charging system according to another embodiment of this application;
FIG. 9 is a schematic structural diagram of a charging system according to still another embodiment of this application;
FIG. 10 is a schematic structural diagram of a charging system according to yet another embodiment of this application;
FIG. 11 is a schematic structural diagram of a charging system according to still yet another embodiment of this application;
FIG. 12 is a schematic structural diagram of a charging system according to still yet another embodiment of this application; and
FIG. 13 is another schematic diagram of the working system in FIG. 1.

### DETAILED DESCRIPTION

According to different power sources, power tools may be divided into electric tools and fuel-powered tools. An advantage of the fuel-powered tool is that the fuel-powered tool can continuously work for a long time at a relatively high power, and a disadvantage is that the fuel-powered tool may pollute the environment, and high noise produced during work may cause noise pollution to a surrounding environment. Therefore, people are always looking for an alternative to the fuel-powered tool.

Electricity is environmentally friendly and clean energy. Therefore, the electric tool is becoming increasingly popular among people. However, a main problem of a current electric tool, especially a high-power electric tool with a rated power (or a working power) above 1 KW is insufficient power supply, which cannot support continuous work of the electric tool for a long time. Taking an electric tool with a rated power of 1 KW to 3 KW as an example, a current battery pack can only support such electric tools for continuous work for a few minutes at most. Once an electric energy of the battery pack runs out, charging the battery pack often takes several hours. The above problem is often referred to as power anxiety of the electric tool.

The problem is described in more detail below by using a garden tool as an example.

The garden tool is usually a garden landscape maintenance equipment. The garden tool usually performs operations on lawns, hedges, flowers, trees, or gardens. There are many types of garden tools, which may include, for example, one or more of the following tools: a lawn trimmer, a lawn mower, a hedge trimmer, a chain saw, an air blower, a leaf shredder, a snow blower, and the like.

The garden tool may be divided into two types: household and commercial. The commercial garden tool is a professional power tool designed for garden workers or landscape companies. Compared with the household garden tool, the commercial garden tool has higher requirements for work efficiency. Therefore, a rated power (which is also referred to as a maximum working power) of the commercial garden tool is usually relatively high.

For the commercial garden tool, a common usage scenario is that a team of 2 to 3 workers works outside for a day to trim gardens for 10 to 20 families. For gardening work, lawn mowing usually takes the longest. Although an area of lawns varies from family to family, an average lawn mowing time is around 20 minutes to 40 minutes. Therefore, a worker A immediately starts mowing with a lawn mower each time the worker A arrives at a garden. When the worker A performs mowing, a worker B sequentially completes other types of work. For example, the worker B first trims lawns, prunes branches, and then blows the lawns. The worker A and the worker B complete all the work almost at the same time. Therefore, a time taken by a team to work in a garden is approximately 20 minutes to 40 minutes (substantially the same as a time consumed for lawn mowing). Once work on one garden is completed, the team goes to another garden and repeats the process until all tasks are completed for a day.

Garden maintenance work has an environmentally friendly attribute. Therefore, for the garden workers or the landscape companies, the electric tool is the most ideal choice. However, as can be seen from the descriptions above, the commercial garden tool has very high requirements on the working efficiency of the power tool, and users usually hope that the power source of the power tool can support uninterrupted work for a day outside. The foregoing requirements are very difficult to meet for current electric tools. Further, considering that gardening work is usually performed outdoors, and there are often no mains socket outdoors, even if electric tools are used, it is impossible to recharge the electric tools in time. Based on the above, current commercial garden tools are mainly fuel-powered tools. Although a small number of commercial garden tools also use electric tools, the electric tools are generally used as auxiliary work tools.

The descriptions are given above by using a garden working scenario as an example. In fact, there are many operating scenarios that have higher requirements on a working time or work efficiency of power tools, for example, an operating scenario in which cleaning tools are used to provide cleaning services for various families or companies, or an operating scenario in which machining or assembly power tools are used for parts processing or device assembly. In order to widely use electric tools in the foregoing scenarios, a main problem is how to increase a working time of the electric tools.

In order to increase the working time of the electric tools, a possible solution is to equip the electric tools with large-capacity battery packs. However, although battery pack developers have made a lot of research and efforts on a capacity and performance of battery packs, performance of current large-capacity battery packs is still unsatisfactory, and the working time of the electric tools still cannot reach a satisfactory level.

The current large-capacity battery pack mainly has the following problems.

First, in the field of electric tools, a capacity of a single battery cell in a large-capacity battery pack on the market is generally small (generally less than 5 Ah). In order to increase the capacity of the battery pack, a common practice among battery pack manufacturers is to increase a quantity of single battery cells in the battery pack. For example, a quantity of single battery cells in a common large-capacity battery pack on the market is generally more than 30. However, a weight of the battery pack generally needs to be kept within a proper range, and therefore, an increase in the quantity of single battery cells is limited. In other words, an increase of the capacity of the battery pack is limited by increasing the quantity of single battery cells. For example, a current mainstream large-capacity and multi-cell battery pack on the market can generally store an electric energy with no more than 300 WH, which is still insufficient enough for electric tools, especially for high-power electric tools. As an example, for an electric tool with a rated power of 3 KW, the electric energy of 300 WH may be consumed in a few minutes or up to a couple of minutes.

Secondly, in the field of electric tools, charging/discharging rate performance of the single battery cell in the large-capacity battery pack is generally low, and a quantity of charging/discharging cycles is generally small. For example, a charging rate of the single battery cell in the large-capacity battery pack on the market is usually around 0.3C, and a discharging rate is generally around 1C. A lower charging rate results in a longer charging time of the battery pack, while a lower discharging rate results in a limited discharging power of the battery pack, resulting in low working efficiency of the high-power electric tool.

Thirdly, a maximum quantity of charging/discharging cycles (which is also referred to as a cycle life) of the single battery cell in the large-capacity battery pack on the market is generally within 1000. A smaller quantity of charging/discharging cycles may shorten a service life of the battery pack, and the battery pack needs to be frequently replaced, which undoubtedly increases use costs of the electric tools.

Fourthly, traditional large-capacity battery packs are charged slowly. The reason why a charging speed of the battery pack is slow is that performance (such as a charging rate) of the single battery cell is poor, and a charging power that can be provided by a charging device of the battery pack is low. A current charging device on the market generally needs to draw power from a mains socket. However, for safety reasons, an electric power that can be provided by the mains socket is usually limited. For example, an electric power of mains sockets in North America is generally limited to 1.8 KW, and an electric power of mains sockets in Europe is generally limited to 3.6 KW. The charging device on the market cannot perform high-power charging on the battery pack due to a limited power of the mains socket. Once an electric energy of the large-capacity battery pack runs out, the battery pack usually needs to be charged for a long time (much longer than a run time that can be provided by the battery pack).

Fifthly, if the user needs to use an electric tool to work for a long time outdoors or in a place where there is no mains socket, once an electric energy of a battery pack runs out, the work is forced to stop because charging cannot be performed in time. Certainly, in order to meet long-term power supply of the electric tool, the user may purchase many standby battery packs. However, on the one hand, a large number of battery packs are inconvenient to carry, and on the other hand, huge cost pressure may be caused. As can be seen from the above, this solution is not actually feasible.

In conclusion, the electric tools cannot be widely used in scenarios that have high requirements on a rated power and a working time due to a low discharging power, a slow charging speed, a short service life, and inconvenient charging of the traditional large-capacity battery packs. Due to the foregoing reasons, in many fields of power tools, and especially in the field of commercial power tools, although fuel-powered tools have obvious shortcomings, the fuel-powered tools are still a first choice for the users, and electric tools are usually used as auxiliary work tools at most.

It is generally considered that, the problem of power anxiety of the electric tools is a natural defect of the electric tools compared with the fuel-powered tools. Unless the battery pack technology rapidly develops, the foregoing problem cannot be resolved in a short term.

Embodiments of this application provide a different problem-solving idea. Based on a proper design of a set of working systems and working methods, the problem-solving idea enables the electric tool to have a capability to continuously work for a long period of time (such as 1 day). During this period of time, electric tool users do not have to worry about insufficient power supply. The problem-solving idea helps to truly realize comprehensive transformation of fuel-powered tools into electric tools. The working system and the working method are described in detail below with reference to different embodiments.

### Embodiment 1: Working system

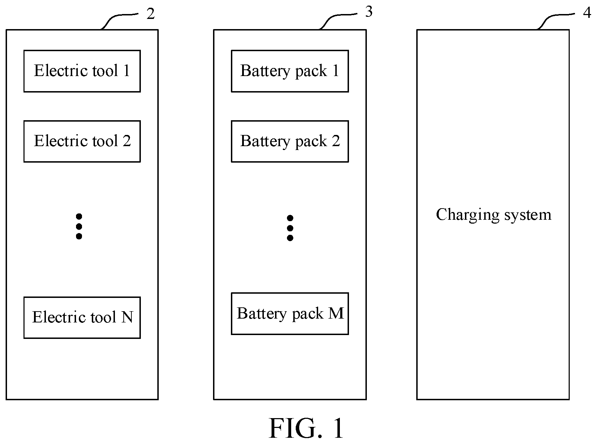

As shown in FIG. 1, a working system 1 provided in Embodiment 1 may include an electric tool system 2, a battery pack system 3, and a charging system 4.

The electric tool system 2 may include one or more electric tools (where FIG. 1 shows N electric tools, N being a positive integer not less than 1). For example, if the electric tool system needs to perform a single task, the task may be completed by using one type of electric tool. In this case, only one electric tool may be configured for a user of the working system 1. In another example, if the electric tool system 2 needs to perform diverse tasks, cooperation of a plurality of electric tools are required to complete the tasks. In this case, a plurality of electric tools may be configured for a user of the working system 1.

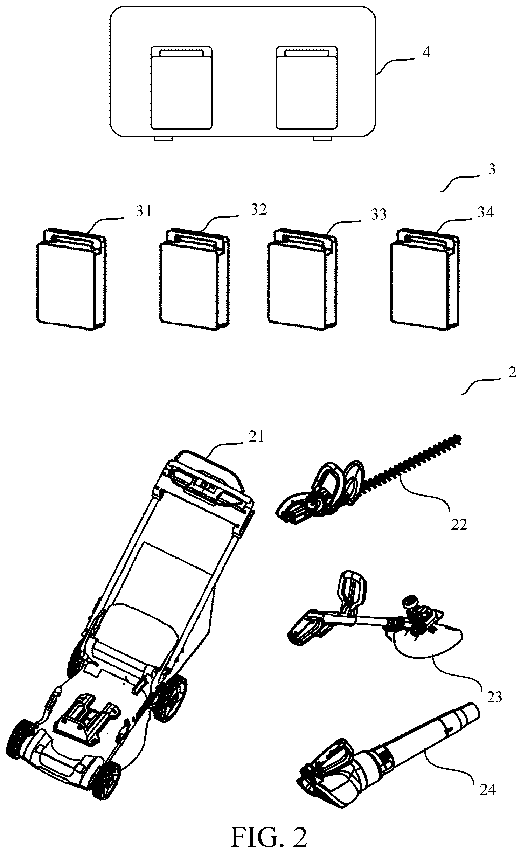

Taking gardening work as an example, as described above, the gardening work usually includes mowing, pruning, trimming, lawn blowing, and the like. FIG. 2 shows an example of an electric tool system 2 that may be configured for a user of a working system 1 for gardening work. The electric tool system 2 may include 4 electric tools, namely, a lawn mower 21, a pruner 22, a lawn trimmer 23, and an air blower 24 (which is also referred to as a lawn blower).

Referring to FIG. 1 again, a type of the electric tool in the electric tool system 2 may be determined according to working content of the electric tool system 2. Taking gardening work as an example, the electric tool in the electric tool system 2 may be a garden electric tool (which is also referred to as a flower garden electric tool or an electric garden tool). The garden electric tool may include, for example, one or more of the following electric tools: a lawn trimmer, a lawn mower, a hedge trimmer, a chain saw, an air blower, a leaf shredder, a snow blower, and the like.

Taking cleaning work in a home or office area as an example, the electric tools in the electric tool system 2 may be several electric cleaning tools. The electric cleaning tools may include, for example, a vacuum cleaner, a floor scrubber, and the like. Alternatively, taking machining or parts assembly work as an example, the electric tool system 2 may include machining or assembly electric tools such as an electric hammer, an electric drill, and the like.

The electric tools in the electric tool system 2 may be electric tools that require a higher rated power. In this embodiment of this application, this type of electric tool is referred to as a high-power electric tool. In traditional technologies, the high-power electric tool has the following features: a long recharging time is required by a battery pack of this type of electric tool after an electric energy runs out, but a discharging time (or a run time) that can be provided by the battery pack to the electric tool is relatively short. In some embodiments, the high-power electric tool may be an electric tool whose rated power (or maximum working power) is greater than 1 KW. For example, the high-power electric tool may be an electric tool whose rated power is in a range of 1 KW to 3 KW.

Still referring to FIG. 1, the battery pack system 3 is configured in the working system 1 to meet power supply requirements of the electric tool system 2. The battery pack system 3 may include a plurality of battery packs (where FIG. 1 shows M battery packs, M being a positive integer greater than 1). The plurality of battery packs may be configured to alternately supply power to the electric tool system 2.

A quantity of battery packs in the battery pack system 3 may be set to be not less than a quantity of battery packs required when the electric tool system 2 works. The quantity of battery packs required when the electric tool system 2 works may be understood as a maximum quantity of battery packs that need to be simultaneously used when the electric tool system 2 works.

Taking gardening work as an example, as shown in FIG. 2, the electric tool system 2 may include a lawn mower 21, a pruner 22, a lawn trimmer 23, and an air blower 24. The worker A may perform lawn mowing by using the lawn mower 21 each time the worker A arrives at a garden. When the worker A performs lawn mowing, the worker B may sequentially complete lawn trimming, pruning, lawn blowing, and the like (where the worker A may also be replaced by an automatic lawn mower for working). For such work, the lawn mower 21 requires a battery pack for power supply, and the pruner 22, the lawn mower 23, and the air blower 24 may share a battery pack because the three sequentially completes working. Based on this, in this example, the quantity of battery packs required when the electric tool system 2 works is at most 2. Therefore, the battery pack system 3 may include 4 battery packs, namely, a battery pack 31, a battery pack 32, a battery pack 33, and a battery pack 34 shown in FIG. 2.

Certainly, the foregoing description is merely an example of a configuration manner of the battery packs in the battery pack system 3. The embodiments of this application are not limited thereto, as long as the battery packs in the battery pack system 3 can meet alternate power supply of the electric tool system 2. For example, in some embodiments, the quantity of battery packs in the battery pack system 3 may also be set to more than twice a quantity of battery packs required when all electric tools in the electric tool system 2 simultaneously work, regardless a working sequence of the electric tools. FIG. 2 is still used as an example. During work, the lawn mower 21, the pruner 22, the lawn trimmer 23, and the lawn mower 24 all require a battery pack for power supply, and therefore, a total of 4 battery packs for power supply are required by the 4 electric tools during work. Therefore, the quantity of battery packs in the battery pack system 3 may be set to 8. However, such a manner of determining the quantity of battery packs may result in some redundant battery packs. Therefore, preferably, the quantity of battery packs in the battery pack system 3 may be set to twice the quantity of battery packs required when the electric tool system 2 works. Such a manner of setting the quantity of battery packs may implement alternate power supply by the plurality of battery packs to the electric tool system 2 with a minimum quantity of battery packs, thereby reducing costs of the battery pack system 3.

As mentioned above, the plurality of battery packs in the battery pack system 3 may be configured to alternately supply power to the electric tool system 2. During implementation, the plurality of battery packs may be divided into a plurality of groups of battery packs. A quantity of battery packs included in each group of battery packs may be equal to the quantity of battery packs required when the electric tool system 2 works. Then, the electric tool system 2 is alternately powered by using the plurality of groups of battery packs.

A manner of grouping the plurality of battery packs is not limited in this embodiment of this application. In an example, the plurality of battery packs may be divided into a plurality of groups in advance. During actual use, the electric tool system 2 may be alternately powered by using groups that are divided in advance. In another example, the plurality of battery packs may not be grouped in advance. For example, when the electric tool system 2 needs to be used for work, the user may select some battery packs from the plurality of battery packs to supply power to the electric tool system 2. In this case, the selected battery packs naturally form a group of battery packs. After the group of battery packs are discharged, the user of the electric tool system 2 may select some battery packs from remaining battery packs to supply power to the electric tool system 2, and then the user of the electric tool system 2 selects some battery packs again to naturally form the other group of battery packs. Certainly, if a quantity of the plurality of battery packs is twice the quantity of battery packs required when the electric tool system 2 works, the user randomly selects some battery packs from the plurality of battery packs for the first time to supply power to the electric tool system 2. In this case, the plurality of battery packs are naturally divided into two groups of battery packs.

The plurality of battery packs supply power to the electric tool system 2 alternately (or in turns) means that after one group of battery packs are discharged, one group of battery packs are selected from remaining battery packs in a powered state to continue to supply power to the electric tool system 2. The plurality of groups of battery packs may alternately supply power to the electric tool system 2 in an order. For example, assuming that the plurality of battery packs are divided into K groups, the plurality of battery packs may alternately supply power to the electric tool system 2 in the following manner: sequentially using the first group to a k^{th} group of battery packs to supply power, and after power supply of the k^{th} battery packs is completed, sequentially using the first group to the k^{th} group of battery packs again to supply power.

It is to be noted that, when the plurality of groups of battery packs alternately supply power to the electric tool system 2, one group of battery packs is not required to be replaced by the other group of battery packs at the same time in this embodiment of this application. In other words, battery packs in a same group may be replaced at the same time or at different times, as long as one group of battery packs are finally replaced by the other group of battery packs.

For example, the battery pack system 3 includes a first group of battery packs and a second group of battery packs, where the first group of battery packs includes a battery pack A and a battery pack B, and the second group of battery packs include a battery pack C and a battery pack D. It is assumed that the electric tool system 2 first uses the first group of battery packs for power supply. However, due to a difference in discharging speeds of different electric tools in the electric tool system 2, the battery pack A is discharged faster and the battery pack B is discharged slower. After the battery pack A is discharged, the battery pack A may be replaced with the battery pack C in the second group of battery packs. Then, after the battery pack B is discharged, the battery pack B is replaced with the battery pack D in the second group of battery packs. It can be seen from the battery pack replacement process that, the battery pack C and the battery pack D do not replace the battery pack A and the battery pack B at the same time. However, from an overall perspective, it may still be understood that the second group of battery packs replaces the first group of battery packs to continue to supply power to the electric tool system 2.

After the battery packs in the battery pack system 3 are discharged, if recharging cannot be performed in time, the electric tool system 2 cannot be alternately powered. Therefore, referring to FIG. 1 again, in order to meet a power recharging requirement of the battery pack system 3, the working system 1 is further equipped with a charging system 4 (which is also referred to as a charging device). The battery pack system 3 and the charging system 4 may be collectively referred to as a power supply system or a power recharging system of the electric tool system 2.

The charging system 4 may be a generator or an energy storage charging system. The generator may be, for example, a generator that utilizes solar energy or a generator that utilizes mechanical energy. The energy storage charging system can store an amount of power internally and then use the power to charge an external device. A structure of the energy storage charging system may be described in detail in Embodiment 3 by using an example, and the descriptions are given in Embodiment 1 mainly from a functional aspect.

In a working process of the electric tool system 2, the electric tool system 2 may occupy one group of battery packs in the battery pack system 3, and battery packs that are not occupied by the electric tool system 2 are referred to as battery packs in an idle state. The charging system 4 may charge the battery packs in the idle state.

It is to be noted that, in some cases, some of the battery packs in the idle state may have sufficient power and do not need to be charged. For example, when the electric tool system 2 initially works, the plurality of groups of battery packs may all be in a fully charged state, and even if there are battery packs in the idle state, the battery packs do not need to be charged. Therefore, in the embodiment of this application, the charging system 4 is not required to supply power to all the battery packs in the idle state. If all the battery packs in the idle state have insufficient power, the charging system 4 may charge all the battery packs in the idle state. If the battery packs in the idle state include both battery packs with insufficient power and battery packs in the fully charged state, the charging system 4 may only charge the battery packs with insufficient power.

As mentioned above, the embodiment of this application hopes that the electric tool system 2 has a capability to continuously work for a long time (such as one day). To achieve this, in the working process of the electric tool system 2, a charging capacity of the charging system 4 to the battery pack system 3 is not less than a discharging capacity of the battery pack system 3 to the electric tool system 2. Alternatively, in the working process of the electric tool system 2, a charging speed (or an average charging speed) of the charging system 4 to the battery pack system 3 is not less than a discharging speed (an average discharging speed) of the battery pack system 3 to the electric tool system 2.

In the working process of the electric tool system 2, since the charging speed of the charging system 4 to the battery pack system 3 is not less than the discharging speed of the battery pack system 3 to the electric tool system 2, an electric energy inputted by the charging system 4 to the battery pack system 3 is not less than an electric energy outputted by the battery pack system 3 to the electric tool system 2, so that it may be ensured that the battery pack system 3 is used as a whole, and insufficient power supply may not occur because the electric tool system 2 consumes power of the battery packs. In other words, in the working process of the electric tool system 2, the charging system 4 charges the battery pack system 3 to enable the battery pack system 3 to be used as whole and is always in a powered state (or a state that can supply power to the electric tool system 2). For example, the charging system 4 charges the battery pack system 3, so that at least one group of battery packs in the battery pack system 3 is always in the powered state in the working process of the electric tool system 2.

It is to be noted that, in the working process of the electric tool system 2, the charging system 4 does not directly charges the entire battery pack system 3, but charges the battery packs in the battery pack system 3 that are in the idle state. Therefore, the aforementioned "charging capacity or charging speed of the charging system 4 to the battery pack system 3" may be indirectly measured by a charging speed of the charging system 4 to the battery packs in the idle state. For example, if a charging speed of the charging system 4 to a single battery pack is faster, and/or the charging system can simultaneously charge more battery packs, it indicates that the charging speed of the charging system 4 to the battery pack system 3 is faster.

Similarly, in the working process of the electric tool system 2, the battery pack system 3 does not discharge to the electric tool system 2 as a whole, but selects one group of battery packs from the battery pack system 3 to discharge to the electric tool system 2. Therefore, the aforementioned "discharging capacity or discharging speed of the battery pack system 3 to the electric tool system 2" may be indirectly measured by a discharging speed of the battery packs selected for discharging to the electric tool system 2. For example, more battery packs are required when the electric tool system 2 works, and/or a discharging speed of the single battery pack is faster during use, it indicates that the discharging speed of the battery pack system 3 to the electric tool system 2 is faster.

It is to be further noted that, in this embodiment of this application, the charging speed of the charging system 4 to the battery pack system 3 is not required to be less than the discharging speed of the battery pack system 3 to the electric tool system 2 at any time. For example, when the electric tool system 2 initially works, all battery packs in the battery pack system 3 may be in the fully charged state. In this case, in this embodiment of this application, the charging speed of the charging system 4 to the battery pack system 3 is not required to be not less than the discharging speed of the battery pack system 3 to the electric tool system 2. Therefore, that the charging speed of the charging system 4 to the battery pack system 3 is not less than the discharging speed of the battery pack system 3 to the electric tool system 2 mentioned in this embodiment of this application is from the perspective of the entire working process of the electric tool system 2. For example, the average charging speed of the charging system 4 to the battery pack system 3 is not less than the average discharging speed of the battery pack system 3 to the electric tool system 2, to ensure that the electric energy of the battery pack system 3 does not drop to a battery level that cannot meet power supply needs of the electric tool system 2.

There are many manners to realize that the charging speed of the charging system 4 to the battery pack system 3 is not less than the discharging speed of the battery pack system 3 to the electric tool system 2. For example, as a possible implementation, a charging power of the charging system 4 may be set, so that a charging speed of the charging system 4 to any battery pack is not less than a discharging speed of the battery pack to an electric tool in the electric tool system 2. The discharging speed of the battery pack to the electric tool may be an average discharging speed of the battery pack to the electric tool, or may be a maximum discharging speed (a discharging speed of the battery pack at a maximum power of the electric tool) of the battery pack to the electric tool. In other words, the discharging speed of the charging system 4 to the battery pack and the discharging speed of the battery pack to the electric tool may be set, so that a time for fully charging the battery pack is not less than a time for fully discharging to the battery pack.

For example, the battery pack system 3 includes two groups of battery packs. When the electric tool system 2 initially works, the two groups of battery packs are in the fully charged state. In this case, a first group of battery packs may be first used to supply power to the electric tool system 2. After the first group of battery packs is discharged, a second group of battery packs may be used to replace the first group of battery packs, and the charging system 4 is used to charge the first group of battery packs with insufficient power. In this example, the charging speed of the charging system 4 may be set, so that the charging speed of the charging system 4 to any battery pack is not less than the discharging speed of the battery pack to the electric tool. In this way, after the second group of battery packs is discharged, the first group of battery packs is fully charged and can continue to supply power to the electric tool system 2.

Certainly, by using the implementation mentioned above as an example, in this embodiment of this application, the charging speed of the charging system 4 to the single battery pack is not required to be greater than a discharging speed of the single battery pack to the electric tool. In some cases, even if the charging speed of the charging system 4 to the single battery pack is less than the discharging speed of the battery pack to the electric tool, uninterrupted power supply to the electric tool system 2 can still be achieved as long as a quantity of groups of battery packs and a quantity of charging interfaces or charging channels of the charging system 4 are properly set.

For example, the battery pack system 3 includes three groups of battery packs. Assuming that the three groups of battery packs are all in the fully charged stated in an initial working stage of the electric tool system, a first group of battery packs may be first used to supply power the electric tool system 2. After the first group of battery packs is discharged, a second group of battery packs may be used to replace the first group of battery packs to continue to supply power to the electric tool system 2, and the charging system 4 is used to charge the first group of battery packs with insufficient power. After the second group of battery packs is discharged, a third group of battery packs may be used to replace the second group of battery packs to continue to supply power to the electric tool system 2, and the charging system 4 is used to charge the second group of battery packs with insufficient power. When the charging system 4 starts to charge the second group of battery packs, in this example, the charging system 4 is not required to charge the first group of battery packs to the fully charged state. In fact, the charging system 4 may simultaneously charge the first group of battery packs and the second group of battery packs, as long as the charging system 4 can charge the first group of battery packs to the fully charged state when the third group of battery packs is discharged. It can be seen that if three groups of battery packs are configured for the electric tool system 2, and the charging system 4 can support simultaneous charging of two groups of battery packs, even if the charging speed of the charging system 4 to the single battery pack is set to half of the discharging speed of the battery pack to the electric tool, continuous power supply to the electric tool system 2 can still be achieved.

For ease of understanding, with reference to FIG. 2 to FIG. 4, the working method of the working system is described below by using gardening work as an example. It may be understood that, the working method may be implemented by a user of a garden electric tool. The user of the garden electric tool may be, for example, a garden worker or a landscape company.

First, in order to successfully complete the gardening work, a suitable electric tool system can be configured according to work content of the gardening work. FIG. 2 shows an example of an electric tool system 2 that may be used for gardening work. The electric tool system 2 may include 4 garden electric tools, namely, a lawn mower 21, a pruner 22, a lawn trimmer 23, and an air blower 24.

Then, a battery pack system 3 and a charging system 4 can be configured according to a quantity of garden electric tools in the electric tool system 2 and a working sequence between the electric tools. As shown in FIG. 2, for the electric tool system 2 formed by the lawn mower 21, the pruner 22, the lawn trimmer 23, and the air blower 24, 4 battery packs 31, 32, 33, and 34 may be configured in the battery pack system 3. The 4 battery packs may be divided into two groups, each group has two battery packs. After components in the working system are configured, the working system may be used to start operations.

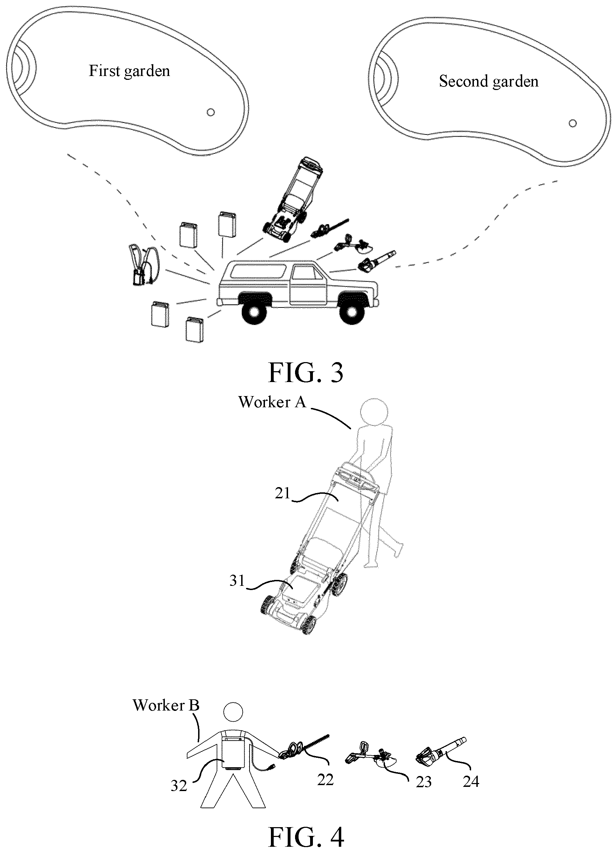

As shown in FIG. 3, first, the user of the working system 2 may go to a first garden and trims the first garden by using a plurality of garden electric tools. In a trimming process of the first garden, a first group of battery packs may be always used for power supply.

FIG. 4 is used as an example. After arriving at the first garden, a worker A may mount the battery pack 31 on the lawn mower 21 and push the lawn mower 21 to cut lawns (certainly, if a smart lawn mower is used, work of the worker A is completed by the smart lawn mower). A worker B carry the battery pack 32 on the back of the worker B by using a back bracket, and uses the battery pack 32 to sequentially supply power to the lawn trimmer 23, the pruner 22, and the air blower 24, thereby sequentially completing lawn trimming, pruning, and lawn blowing. Generally, a time consumed for lawn mowing is substantially the same as a total time consumed for lawn mowing, pruning, and lawn blowing. For a garden of about 1000 square meters, gardening may be basically completed within 20 minutes to 40 minutes.

After gardening on the first garden is completed, referring to FIG. 3, the user of the working system 1 may move to a second garden. For example, the user may retract various components of the working system to a vehicle (where the charging system 4 is not shown in FIG. 3, and the charging system 4 may be mounted on the vehicle), and drives to the second garden. In the second garden, the plurality of garden electric tools may still be used to trim the second garden. A trimming manner of the second garden may be similar to the trimming manner of the first garden, and details are not described herein again. A difference between the two lies in that, in a trimming process of the second garden, the electric tool system 2 uses a second group of battery packs 33 and 34 to supply power.

After trimming on the first garden is completed and before trimming on the second garden is completed, the charging system 4 may be used to charge the first group of battery packs, so that before trimming on the second garden is completed, the first group of battery packs is charged to the fully charged state. In this way, the first group of battery packs may be used again for subsequent gardening work. Certainly, a charging start time of the first group of battery packs is not limited in this embodiment of this application, and the first group of battery packs may be charged in a driving process of the vehicle. Alternatively, charging on the first group of battery packs may be started before trimming on the second garden is started.

Taking gardening work as an example, from the perspective of a single battery pack, a charging speed and discharging speed of the charging system 4 to the battery pack system 3 may be defined in one or more of the following manners:
When a quantity of battery packs in the battery pack system 3 is twice a quantity of battery packs required when the electric tool system 2 works, assuming that a time required for the single battery pack to be charged from an empty state to a fully charged state is t1, and a time required for the single battery pack to be discharged from the fully charged state to the empty state is t2, the charging speed and discharging speed of the charging system 4 to the battery pack system 3 meets: t1≤t2.

When the quantity of battery packs in the battery pack system 3 is N times (N>2) the quantity of battery packs required when the electric tool system 2 works, assuming that the time required for the single battery pack to be charged from the empty state to the fully charged state is t1, and the time required for the single battery pack to be discharged from the fully charged state to the empty state is t2, the charging speed and discharging speed of the charging system 4 to the battery pack system 3 meets: t1≤t2×N.

When the quantity of battery packs in the battery pack system 3 is twice the quantity of battery packs required when the electric tool system 2 works, assuming that the time required for the single battery pack to be charged from the empty state to the fully charged state is t1, the time required for the single battery pack to be discharged from the fully charged state to the empty state is t2, and a time required for moving from one garden to another garden is t3, the charging speed and discharging speed of the charging system 4 to the battery pack system 3 meets: t1≤t2+t3. t3 may be set according to an actual situation. For example, if one garden is usually close to another garden, t3 may be set to 0; and if one garden is usually far away from another garden, such as an average of one hour's drive, t3 may be set to 1 hour.

When the quantity of battery packs in the battery pack system 3 is N times (N>2) the quantity of battery packs required when the electric tool system 2 works, assuming that the time required for the single battery pack to be charged from the empty state to the fully charged state is t1, the time required for the single battery pack to be discharged from the fully charged state to the empty state is t2, and a time required for moving from one garden to another garden is t3, the charging speed and discharging speed of the charging system 4 to the battery pack system 3 meets: t1≤t2×N+t3. t3 may be set according to an actual situation. For example, if one garden is usually close to another garden, t3 may be set to 0; and if one garden is usually far away from another garden, such as an average of one hour's drive, t3 may be set to 1 hour.

The working system and working method provided in this application are described as a whole above with reference to Embodiment 1. It can be seen from the descriptions of Embodiment 1 that, a suitable battery pack needs to be configured for the working system, to use the working system 1. A possible battery pack configuration manner is to choose a large-capacity battery pack existing on the market. However, as described above, the large-capacity battery pack on the market has many shortcomings in terms of a capacity, charging and discharging rates, and a service life. Such a battery pack may be selected to implement uninterrupted power supply to the electric tool system, which may cause low working efficiency and high costs of the entire working system.

The battery pack provided in this application may be described in detail below with reference to Embodiment 2. It may be understood that, Embodiment 2 and Embodiment 1 may be combined with each other. In other words, the battery pack mentioned in Embodiment 2 may be applied to any working system or working method described in Embodiment 1.

### Embodiment 2: Battery pack

As mentioned above, a capacity of a traditional large-capacity battery pack generally does not exceed 300 WH. However, an electric energy of 300 WH is relatively low, and the electric energy may be quickly used up by an electric tool, which may increase replacement frequency of battery packs. The replacement frequency of the battery packs is high, which may waste a working time and affect work efficiency, and may also cause a shorter service life of the battery packs. In order to alleviate this problem, an embodiment of this application provides a battery pack with a capacity of not less than 500 WH (such as 600 WH).

Taking gardening work as an example, generally, a time for trimming one garden is in a range of 20 minutes to 40 minutes, and a battery pack with a capacity of not less than 500 WH may basically ensure that the battery pack does not to be replaced in a trimming process of one garden. In this way, the user may replace the battery pack on the way to another garden, so that the replacement of the battery pack may not affect the work efficiency.

As mentioned above, a quantity of single battery cells in the traditional large-capacity battery pack is generally more than 30, which may cause the battery pack to be overweight. In the embodiment of this application, a quantity of battery cells in the battery pack is designed to be not greater than 15, and a capacity of the single battery cell in the battery pack is not less than 10 Ah, so that the battery pack may not be overweight while the capacity of the battery pack is ensured.

As an example, the capacity of the battery pack may be designed to be greater than 500 WH, and the quantity of battery cells in the battery pack is controlled to be less than 15. In this way, the battery pack can be prevented from being overweight, and the battery packs are prevented from being frequently replaced to some extent due to an excessively small capacity of the battery pack. It can be seen that the design of the battery pack can achieve balance between a weight and work efficiency of the battery pack.

A rated voltage (which is also referred to as a voltage platform) of the battery pack may be designed according to a working voltage (which is also referred to as a voltage platform) of the electric tool. The rated voltage of the battery pack generally needs to match the working voltage of the electric tool. In some embodiments, the rated voltage of the battery pack may be designed to be higher, for example, not less than 40 V. As an example, the rated voltage of the battery pack is designed to be 60 V. When a discharging rate is fixed, the rated voltage of the battery pack is designed to be higher, to increase a discharging power of the battery pack, thereby supporting the electric tool in working at a larger power.

The discharging power of the battery pack may be determined according to needs of the electric tool. In some embodiments, the discharging power of the battery pack may be set to be not less than a maximum working power of the electric tool. As an example, the discharging power of the battery pack may be set to 3 KW.

As mentioned above, a charging rate of a single battery cell of a large-capacity battery pack on the market is usually around 0.3C, and a discharging rate is generally around 1C. Such charging and discharging rates may cause slow charging and discharging speeds of the battery pack, affecting working efficiency.

In the embodiment of this application, a maximum continuous charging rate and/or a maximum continuous discharging rate of a single battery cell in the battery pack may be designed to be not less than 3C, to significantly increase the charging speed and/or the discharging speed of the battery pack. The maximum continuous charging rate is a maximum charging rate that can be always kept in a continuous charging process of charging the battery pack from an empty state to a fully charged state. The maximum continuous discharging rate is a maximum discharging rate that can be always kept in a continuous discharging process of discharging to the battery pack from the fully charged state to the empty state. In other words, the battery pack can always be charged at a charging rate of not less than 3C in the continuous charging process, and the battery pack can always be discharged at a discharging rate of not less than 3C in the continuous discharging process. In this application, the empty state of the battery pack is a state where an SOC (state of charge) of the battery pack is less than 5% of a rated capacity of the battery pack, and the fully charged state of the battery pack is a state where the SOC of the battery pack is greater than 95% of the rated capacity of the battery pack.

Specifically, since a smaller internal resistance of the single battery cell indicates higher charging and discharging rates of the single battery cell, a single battery cell with a small internal resistance may be customized, to increase a charging rate and/or a discharging rate of the single battery cell. In addition, the single battery cell with the small internal resistance may reduce an increase of a temperature of the battery pack during charging and discharging. As an example, the rated voltage of the battery pack may be designed to be not less than 40 V, and the maximum continuous charging rate and the maximum continuous discharging rate of the battery pack may be designed to be not less than 4C. As another example, the maximum continuous charging rate and the maximum continuous discharging rate of the battery pack may also be set to be not less than 5C. This design can ensure that the battery pack can support high-power charging and high-power discharging. Therefore, by using this design, the battery pack can be quickly charged and discharged during work, so that the entire working system can work uninterruptedly with high efficiency.

Further, the internal resistance of the single battery cell of the battery pack is configured, so that the maximum continuous charging rate of the battery pack is not less than the maximum continuous discharging rate of the battery pack, and the charging speed of the battery pack is not less than the discharging speed of the battery pack. In other words, in this application, the maximum continuous charging rate of the battery pack is not less than the maximum continuous discharging rate, and both the maximum continuous charging rate and the maximum continuous discharging rate of the battery pack are not less than 3C, so that a charging capacity and a discharging capacity of the battery pack are much greater than those of a common battery pack on the market.

As mentioned above, a maximum quantity of charging/discharging cycles of the large-capacity battery pack on the market is generally within 1000, and a maximum quantity of charging/discharging cycles of the common large-capacity battery pack is in a range of 300 to 500. A small quantity of charging/discharging cycles may result in a shorter service life of the battery pack and a need for frequent replacement, which undoubtedly increases use costs of the working system. Taking gardening work as an example, generally, garden workers need to complete trimming on 10 to 20 gardens in one day. Assuming that the garden workers prepare two groups of replaceable battery packs and replace the battery packs every time the garden workers complete trimming on a garden, one battery pack needs to be charged and discharged about 8 times a day. If the large-capacity battery pack whose maximum quantity of charging/discharging cycles in a range of 300 and 500 is used, a new battery pack needs to be purchased after a few months at most, which may obviously cause higher costs for the working system.

In order to resolve the foregoing problem, in the embodiment of this application, the maximum quantity of charging/discharging cycles of the single battery cell in the battery pack is designed to be not less than 3000. Preferably, the maximum quantity of charging/discharging cycles of the single battery cell is not less than 5000, to ensure the service life of the battery pack. Even if one battery pack needs to be charged and discharged 8 times to 10 times a day, 5000 charging/discharging cycles can make the battery pack have a service life of two years, thereby reducing the costs of the entire working system.

In addition, the maximum quantity of charging/discharging cycles of the single battery cell in the battery pack is designed to be not less than 5000. This design is particularly important for a working scenario that requires a higher quantity of charging/discharging of the battery pack in a day (for example, a scenario where the garden workers trims 10 to 20 gardens outside in a day), and an ordinary working scenario usually has no such requirement.

As mentioned in Embodiment 1, this application aims to enable the electric tool system to have a capability to work without interruption. In order to enable the electric tool system to have this capability, in the embodiment of this application, a plurality of groups of battery packs are required to be alternately charged and discharged. During alternate charging and discharging of the plurality of groups of battery packs, if temperature control (or temperature management) is not performed on the battery packs, two problems may be caused. Firstly, in a low-temperature working scenario (such as outdoors), the battery pack may be too cold, and consequently, the battery pack cannot immediately start charging or discharging. Secondly, during charging and discharging of the battery pack, a temperature of the battery pack may rise. If the temperature of the battery pack is too high and exceeds a preset temperature threshold, the charging system may need to wait for the temperature of the battery pack to drop before charging the battery pack, causing the charging process of the battery pack to be interrupted. If the two problems occur, the electric tool system cannot uninterruptedly work for a period of time, thereby degrading performance of the working system.

To resolve the problem, in some embodiments, the battery pack may be equipped with a heating device and/or a heat dissipation device. The heating device can prevent the battery pack from being too cold, allowing the battery pack to start charging or discharging immediately in cold weather. The heat dissipation device can prevent the battery pack from being over-temperature to some extent. It can be seen that, a configuration of the heating device and/or the heat dissipation device for the battery pack can improve uninterrupted working performance of the electric tool system to some extent.

Some electric tools (such as handheld electric tools) do not have a battery pack mounting portion. Power supply of such electric tools can be achieved by using a backpack bracket (which is also referred to as a carrying device), that is, the user can use the backpack bracket to carry the battery pack, thereby supplying power to the electric tool. A traditional backpack bracket and the battery pack adopt an integrated design, which may limit use of the battery pack.

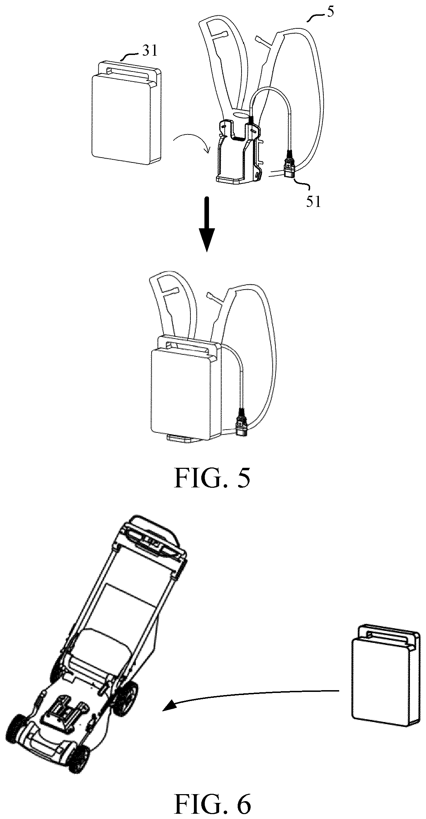

In the embodiment of this application, a separate design for the battery pack and the backpack bracket is adopted, that is, the backpack bracket (where the backpack bracket may also be a part of the working system mentioned above) is detachably connected to the battery pack. FIG. 5 is used as an example. A battery pack 31 and a backpack bracket 5 may be separated from each other or may be assembled together. When the battery pack 31 needs to be used to supply power to a handheld electric tool (such as the pruner 22, the lawn trimmer 23, the air blower 24, and the like in FIG. 4), the battery pack 31 may be mounted on the backpack bracket 5, and then is electrically connected to the handheld electric tool through an interface 51 on the backpack bracket 5. When the battery pack needs to be used as a non-handheld electric tool, the battery pack is mounted on a battery pack mounting portion of the electric tool, to supply power to the non-handheld electric tool. FIG. 4 and FIG. 6 are used as an example, the battery pack may be first mounted on the lawn mower in a manner shown in FIG. 6, and then the worker may push the lawn mower to perform lawn mowing in a manner shown in FIG. 4.

An advantage of using a separate design for the battery pack and the backpack bracket is that the battery pack can be mounted on the electric tool to work, and can also supply power to the electric tool through the backpack bracket, making the use of the battery pack more flexible.

The charging system 4 provided in this application is mainly described from a functional perspective with reference to Embodiment 1. With reference to Embodiment 3, a structure of the charging system 4 is described in more detail below by using an energy storage charging system 4 as an example. It may be understood that, Embodiment 3 may be combined with Embodiment 1 and Embodiment 2. In other words, the charging system 4 mentioned in Embodiment 3 may be applied to any working system or working method described in Embodiment 1, and can also be used with any type of battery pack described in Embodiment 2.

### Embodiment 3: Energy storage charging system

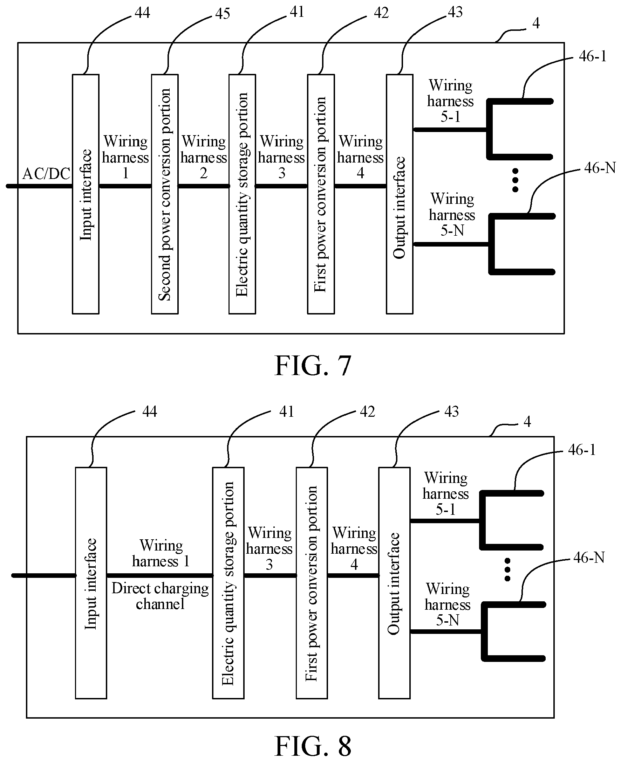

The energy storage charging system stores electrical energy (or an electric energy) inside. If the working system adopts the energy storage charging system, the process in which the battery pack system alternately supplies power to the electric tool system may be a process in which the battery pack system is used as a medium, and electric energy scheduling is performed between the energy storage charging system and the electric tool system. Since an electric energy of the energy storage charging system is much greater than an electric energy storable in the battery pack system, the energy storage charging system is used to supply power to the electric tool system, so that power supply needs of the electric tool system for a long time can be met. In addition, since the battery pack does not have a high requirement on a capacity, when the battery pack is mounted on the electric tool, the electric tool may not be overweight, and the energy storage charging system and the battery pack cooperate to supply power, so that the electric tool system may have a long run time and a light weight. A structure of the energy storage charging system is described in more detail below with reference to FIG. 7 to FIG. 12.

As shown in FIG. 7, the energy storage charging system may include an electric energy storage portion 41, a first power conversion portion 42, and an output interface 43.

The electric energy storage portion 41 may be configured to store an electric energy. For example, the electric energy storage portion 41 may use an energy storage component (or an energy storage medium) to store energy. The energy storage component may include, for example, one or more of the following types of energy storage components: a ternary lithium battery, a lead-acid battery, a supercapacitor, a lithium iron phosphate battery, and a hydrogen fuel cell.

In some embodiments, the electric energy storage portion 41 may include one or more battery cells. If the electric energy storage portion 41 includes a plurality of battery cells, the plurality of battery cells may be connected in series or in parallel with each other, or some of the battery cells may be connected in series and some of the battery cells may be connected in parallel.

In addition to the battery cells, the electric energy storage portion 41 may further include a battery management system to manage the battery cells. For example, the battery management system may detect a status of the battery cells and prevent the battery cells from being overcharged or over-discharged.

In the embodiment of this application, an electric energy storable in the electric energy storage portion 41 is not specifically limited, which may be set according to actual requirements. For example, the electric energy storage portion 41 may be configured, so that the electric energy of the electric energy storage portion 41 may meet an electricity requirement of the electric tool system for working outside for a day. As mentioned above, in the embodiment of this application, the electric tool system can have a capability to uninterruptedly work for a long time. If the electric energy of the electric energy storage portion 41 can meet the electricity requirement of the electric tool system for working outside for a day, the electric tool system has a capability to uninterruptedly work for a day. In this way, the user can safely use the electric tool system to work outside for a day, and after finishing the work, the user can use evening time to charge the electric energy storage portion 41.

A specific value of the electric energy storable in the electric energy storage portion 41 needs to be determined according to an application scenario. A gardening scenario shown in FIG. 2 and FIG. 3 is used as an example. Generally, garden workers or landscape companies need to trim 10 to 20 gardens a day outside. Therefore, an electric energy required for trimming 10 to 20 gardens a day is first estimated, and then the electric energy storable in the electric energy storage portion 41 is set to be greater than or equal to the estimated electric energy. Generally, if the electric energy storable in the electric energy storage portion 41 is set to be not less than 5 KWH

, which can basically meet the electric energy required for trimming 10 to 20 gardens. In some embodiments, the electric energy storable in the electric energy storage portion 41 may be set to 10 KWH, 20 KWH, or above 30 KWH.

An electric energy carried by a single battery pack is less than one eighth of a total electric energy required by a gardening team for working outside for a whole day, that is, the electric energy carried by a single battery pack is less than one eighth of the electric energy stored in the electric energy storage portion. Since the electric energy stored in the energy storage charging system can meet a requirement of a total electric energy of a commercial garden for a whole day's work, and the energy storage charging system can quickly charge the battery pack at a charging rate of not less than 3C, so that continuous power supply to the electric tool system may be implemented by using small-capacity battery packs and a small quantity of battery packs, use costs of the electric tool system are reduced, and the weight of the electric tool system may be reduced by mounting the small-capacity battery packs on the electric tools.

In some embodiments, the electric energy storable in the electric energy storage portion 41 may also be less than the electricity requirement of the electric tool system for working outside for a day, for example, the electric energy of the electric energy storage portion 41 may be set to meet an electricity requirement for working outside for half a day. In this way, the user may recharge the electric energy storage portion 41 during lunch time. Alternatively, the electric energy storable in the electric energy storage portion 41 may be greater than the electricity requirement for working outside for a day, so that the electric energy storage portion 41 may be recharged every few days without recharging the electric energy storage portion 41 every day.

The electric energy storage portion 41 may include a single battery cell. A charging rate and a discharging rate of the single battery cell may be determined according to requirements on the charging and discharging speeds of the charging system 4. Compared with the battery pack, the electric energy storage portion 41 has relatively lower requirements for real-time charging and discharging. Therefore, in some embodiments, the charging and discharging rates of the single battery cell in the electric energy storage portion 41 may be set lower, thereby reducing the costs of the battery cell.

As mentioned in Embodiment 2, in order to support the electric tool to work at a high power, battery cells of the battery pack are preferably battery cells with a small internal resistance, to meet higher requirements on the charging and discharging rates. Therefore, by setting the charging and discharging rates of the single battery cell in the electric energy storage portion 41 lower, for example, setting to be less than the charging and discharging rates of the single battery cell in the battery pack, the two types of battery cells may be used in conjunction with each other, thus reducing the costs of the battery cells of the entire system.

As an example, both the charging rate and/or the discharging rate of the single battery cell of the electric energy storage portion 41 may be set to be not greater than 1. 5C. Preferably, the charging rate of the single battery cell of the electric energy storage portion 41 is not greater than 1C, and the discharging rate is not greater than 1.5C. For example, the charging rate of the single battery cell in the electric energy storage portion 41 may be set to 1C, and the discharging rate may be set to 1.5C. Then, the electric energy storable in the electric energy storage portion 41 may be set to 5 KWH. In this way, a charging pile (for example, an alternating current charging pile or a direct current charging pile) may be used to charge the electric energy storage portion 41 with a power of 5 KW, so that the electric energy storage portion 41 may be charged from an empty state to a fully charged state within one hour.

A rated voltage (or a voltage platform) of the electric energy storage portion 41 may be set according to actual requirements. For example, the rated voltage of the electric energy storage portion 41 may be designed to be not less than 48 V. Certainly, the rated voltage of the electric energy storage portion may also be designed to be not less than 80 V.

Since an electric energy stored in the electric energy storage portion is much greater than an electric energy stored in the battery pack, when the electric energy storage portion charges the battery pack with a power of 5 KW, the discharging rate of the electric energy storage portion is only 1C. However, a capacity of the battery pack is much less than a capacity of the electric energy storage portion, and when the capacity of the battery pack is 500 WH, a charging power of 5 KW may support the battery pack to be quickly charged at a charging rate of 10C. Therefore, even if the discharging rate of the electric energy storage portion is low, the battery pack may still be charged quickly at a high rate. Furthermore, a battery cell type of the electric energy storage portion may be different from that of the battery pack. Specifically, an internal resistance of the battery cell in the electric energy storage portion may be greater than the internal resistance of the battery cell in the battery pack, thereby reducing the costs of the electric energy storage portion.

The first power conversion portion 42 may be electrically connected to the electric energy storage portion 41. For example, the first power conversion portion 42 may establish a power and communication control connection with the electric energy storage portion 41 through a wiring harness 3 shown in FIG. 7.

The first power conversion portion 42 may be configured to convert the electric energy stored in the electric energy storage portion 41 into a first charging power suitable for charging the battery pack. For example, the first power conversion portion 42 may include a DC/DC converter. The DC/DC converter may convert a direct current power outputted by the electric energy storage portion 41 into a direct current power suitable for charging the battery pack. The first power conversion portion 42 may include a DC/DC converter, or may include a plurality of DC/DC converters. When the first power conversion portion 42 includes a plurality of DC/DC converters, the plurality of DC/DC converters may adopt an electrically isolated design or may adopt an electrically non-isolated design.

The output interface 43 may be electrically connected to the first power conversion portion 42. As shown in FIG. 7, the output interface 43 may be electrically connected to the first power conversion portion 42 through a wiring harness 4. The output interface 43 may output the first charging power to charge the battery pack.

The output interface 43 may charge one battery pack, or may simultaneously charge a plurality of battery packs. As mentioned above, the battery packs in the battery pack system may include a plurality of groups of battery packs. Assuming that the output interface 43 can support charging of N battery packs at the same time, in some embodiments, N may be set to be not less than a quantity of battery packs included in each group of battery packs.

The output interface 43 may include one charging channel or a plurality of charging channels, where each charging channel may be configured to charge a battery pack. This charging channel may use a direct current to charge the battery pack, and therefore, the charging channel may also be referred to as a direct current charging channel.

A connection manner between the output interface 43 and the battery pack is not specifically limited in the embodiment of this application. As an example, as shown in FIG. 7, the output interface 43 may provide an external wiring harness 5 (which may include wiring harnesses 5-1 to 5-N). The output interface 43 charges the battery pack through the external wiring harness 5.

As another example, the output interface 43 may first be electrically connected to one or more charging bins 46 (which may include charging bins 46-1 to 46-N) through the wiring harness 5. A quantity of charging bins 46 may be, for example, two. A configuration of the charging bin allows the battery pack to be easily mounted in the charging system 4 for charging, and the entire process is safe and reliable. In addition, the design of the charging bin is also conducive to saving a space occupied by the charging system 4.

A control module may be arranged inside the output interface 43. The control module may be electrically connected to a power interface and a communication interface in the charging bin 46 through the wiring harness 5, so as to control power and communication of the charging process of the battery pack. For example, the output interface 43 may perform one or more of the following operations through the control module and a battery pack in the charging bin 46: communication protocol interaction, charging process control, charging protection, and the like.

A trigger interface may be arranged in the charging bin 46. The trigger interface may be configured to identify whether an object placed in the charging bin is a battery pack, and when it is determined that the object placed in the charging bin is a battery pack, the charging system 4 is triggered to charge the battery pack.

The charging bin 46 may perform wired charging on the battery pack. Alternatively, in some embodiments, the charging bin 46 may also perform wireless charging on the battery pack. Wireless charging can reduce a quantity of wiring harnesses in the charging system 4 and reduce a weight of the charging system 4, thereby making the connection manner between the battery pack and the charging bin 46 simpler.

As mentioned in Embodiment 2, in order to increase the charging speed of the battery pack, a single battery cell with a large charging rate may be configured for the battery pack, so that the battery pack can be charged at a high rate. In a high-rate charging process, due to a large charging current of the battery pack, if a temperature of the battery pack in the charging process is not controlled, the temperature of the battery pack may be higher. A higher temperature of the battery pack may cause two problems. Firstly, in the charging process, if the temperature of the battery pack exceeds a preset temperature threshold, the charging system 4 may enter a charging protection state. Once entering the charging protection state, the charging process of the battery pack may be forced to stop. Secondly, if the temperature of the battery pack is high after charging is completed, the battery pack may need to wait for the temperature of the battery pack to drop before starting the discharge process of the battery pack. Both of the problems may cause interruptions in the work of the working system.

In order to avoid the foregoing problems, a temperature control function may be added to the charging bin 46, so that the charging bin 46 can perform temperature control on the battery pack in the charging process. For example, a heating device and/or a heat dissipation device may be configured in the charging bin 46. The heating device and/or the heat dissipation device may dynamically control an ambient temperature of the battery pack in the charging and discharging processes of the battery pack, to ensure that the battery pack can be continuously charged, and ensure that the battery pack can immediately start discharging to the electric tool after charging is completed.

Still referring to FIG. 7, in some embodiments, the charging system 4 may further include an input interface 44. The input interface 44 may be configured to receive an input power (that is, a power inputted from the outside to the charging system 4).

A source of the input power is not specifically limited in the embodiment of this application. The input interface 44 may be configured to draw power from a direct current power supply and/or an alternating current power supply. For example, the input interface 44 may support receiving an input power from one or more devices of the following: domestic and foreign mains sockets, a direct current charging pile, an alternating current charging pile, a mobile power supply vehicle, and an energy storage cabinet (such as a large energy storage cabinet).

The input interface 44 may further include a communication control interface. The input interface 44 may perform communication control and negotiation of charging protocols with an external power supply through the communication control interface. For example, the communication control interface may support a plurality of types of communication protocols, so that the input interface 44 can draw power from different types of power supplies, or the input interface 44 can be compatible with different types of power supply input methods. As an example, the input interface 44 may perform one or more of the following operations on the direct current charging pile or the alternating current charging pile: interface conversion, charging pile enabling waking up, communication protocol parsing, and the like, thereby smoothly directing electric energy of the charging pile to the electric energy storage portion 41.

Still referring to FIG. 7, in some embodiments, the charging system 4 may further include a second power conversion portion 45. The second power conversion portion 45 may be electrically connected to the input interface 44. For example, the second power conversion portion 45 may be electrically connected to the input interface 44 through a wiring harness 1 in FIG. 7.

The second power conversion portion 45 may convert a direct current power into a second charging power suitable for charging the electric energy storage portion 41, to charge the electric energy storage portion 41. For example, the second power conversion portion 45 may include a DC/DC converter. The DC/DC converter may be used to convert a direct current power inputted from the input interface 44 into a direct current power with a suitable voltage. The converted direct current power may be used as the second charging power, to charge the electric energy storage portion 41. In another example, the second power conversion portion 45 may include an AC/DC converter. The AC/DC converter may be used to convert an alternating current power inputted from the input interface 44 into a direct current power. The converted direct current power may be used as the second charging power, to charge the electric energy storage portion 41. Certainly, the second power conversion portion 45 may simultaneously support conversion of the direct current power and the alternating current power into the second charging power. For example, the second power conversion portion 45 may include both the DC/DC converter and the AC/DC converter.

Referring to FIG. 8, in some embodiments, a direct charging channel (that is, a charging channel where the wiring harness 1 in FIG. 8 is located) may be arranged between the input interface 44 and the electric energy storage portion 41. When the input power received by the input interface 44 is a direct current power, the direct current power may be directly used to charge the electric energy storage portion 41 without being processed through the second power conversion portion. The direct current power may be provided by an ordinary direct current power supply (such as a battery), or may be provided by a direct current charging pile.

For example, some direct current charging piles support a direct charging module. Therefore, after the input interface 44 receives a direct current power inputted by such a direct current charging pile, the input interface 44 may perform operations such as interface conversion, charging pile enabling waking up, and communication protocol parsing on the direct current charging pile, to negotiate with the direct current charging pile to perform charging in a direct charging mode. After negotiation is successful, the input interface 44 may bypass the second power conversion portion 45 shown in FIG. 7, direct the input power of the direct current charging pile to the electric energy storage portion 41, and directly charge the electric energy storage portion 41.

In the direct charging mode, there is no need to convert an external input power, which can improve charging efficiency of the charging system 4.

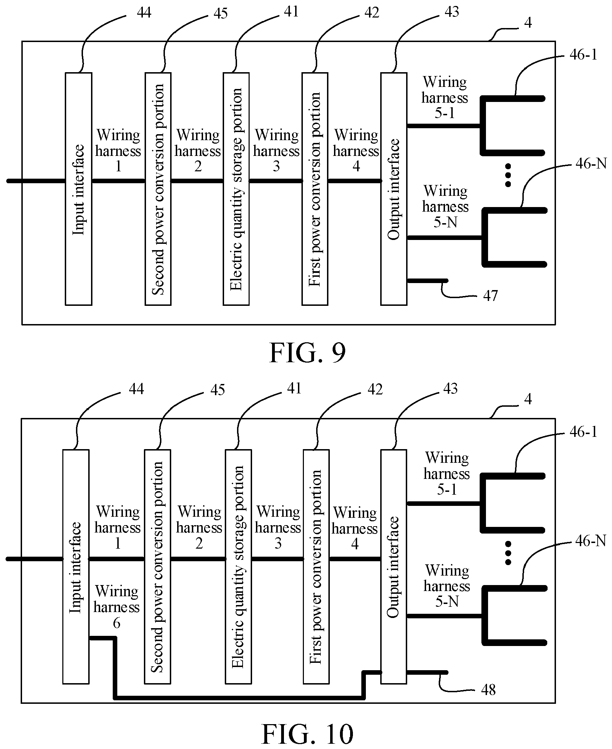

As shown in FIG. 9, in some embodiments, the charging system 4 may support an AC inverter output mode. In this mode, the first power conversion portion 42 may convert an electric energy stored in the electric energy storage portion 41 into an alternating current power, and provide the alternating current power to the outside through a first alternating current output interface 47 of the output interface 43. For example, the first power conversion portion 42 may include a DC/AC converter. When the charging system 4 enters the AC inverter output mode, the first power conversion portion 42 may use the DC/AC converter to invert a direct current power stored in the electric energy storage portion 41 into one or more alternating current powers (or referred to as an AC power), and provide the one or more alternating current powers to the outside through the first alternating current output interface 47.

A configuration of the first alternating current output interface 47 enables the charging system 4 to be used as an emergency power supply, a standby power supply, or an uninterruptible power supply (UPS), thereby expanding functions of the charging system 4.

Referring to FIG. 10, in some embodiments, the output interface 43 may further include a second alternating current output interface 48. The second alternating current output interface 48 may be configured to output the alternating current power when an input power of the input interface 44 is an alternating current power. For example, when a power inputted from the outside through the input interface 44 is the alternating current power (for example, an input power provided by the mains or the alternating current charging pile is the alternating current power), the charging system 4 may be set to be in an AC output mode. In the AC output mode, an alternating current power received by the input interface 44 may be directly directed to the second alternating current output interface 48 of the output interface 43, and the second alternating current output interface 48 provides the alternating current power to the outside.

In some embodiments, the second alternating current output interface 48 is configured to charge the battery pack through a charging machine or a charger. For example, when the charging bin of the charging system 4 is insufficient, the charger of the battery pack may be connected through the second alternating current output interface 48, to perform charging on the battery pack through the charger, so that the charging system 4 can support more battery packs to be simultaneously charged. In addition, this embodiment requires that the battery pack can be connected not only with the output interface 43, but also with the charging machine or the charger, thereby expanding interface types supported by the battery pack.

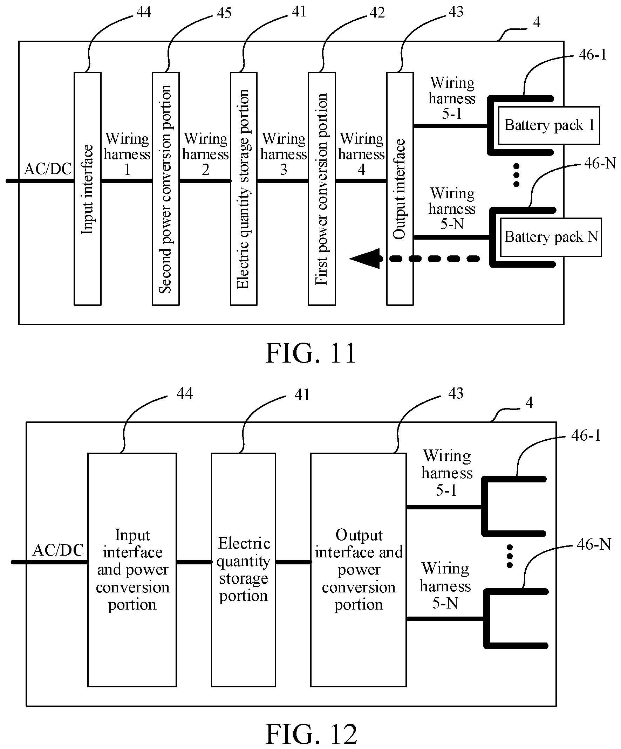

Referring to FIG. 11, in some embodiments, the charging system 4 can support a reverse charging mode of the battery pack (refer to a direction pointed by a dotted arrow in FIG. 11). In other words, the charging device 4 can use electric power of the battery pack to reversely charge the electric energy storage portion 4. For example, the first power conversion portion 42 may convert the electric power stored in the battery pack into a third charging power suitable for charging the electric energy storage portion 41. Then, the first power conversion portion 42 may charge the electric energy storage portion 41 by using the third charging power. As mentioned above, the first power conversion portion 42 may include a DC/DC converter. The DC/DC converter may convert a direct current power outputted by the first power conversion portion 42 into a direct current power suitable for charging the battery pack. In order to enable the charging system 4 to support the reverse charging mode of the battery pack, the DC/DC converter in the first power conversion portion 42 may be a bidirectional DC/DC converter, so that the DC/DC converter can not only convert the direct current power outputted by the first power conversion portion 42 into the direct current power suitable for charging the battery pack, but also convert a direct current power outputted by the battery pack into a direct current power suitable for charging the first power conversion portion 42.

As mention above, a current charging device on the market generally needs to draw power from a mains socket. However, in consideration of safety, an electric power of a mains AC socket is usually limited, resulting in that the charging device cannot charge the battery pack at a high power. The charging system 4 provided in this embodiment of this application uses the electric energy storage portion 41 to supply power, which is not limited by the mains socket. Therefore, in some embodiments, a charging power of the charging system 4 may be specially customized and developed, so that an average charging power (or a maximum charging power) of the charging system 4 is greater than a limitation of the mains socket to the electric power. In other words, the charging system 4 provided in this embodiment of this application can break a limitation of the mains to the charging power, to support high-rate charging on the battery pack. For example, a charging power of the charging system 4 in North America may be greater than 1.8 KW, and a charging power of the charging system 4 in Europe may be greater than 3.6 KW.

In addition, the average charging power of the charging system 4 provided in the embodiment of this application to the battery pack is not less than an average discharging power of the battery pack to the electric tool. Specifically, the average charging power of the charging system 4 to the battery pack is an average charging power of a single charging bin to a single battery pack. The average charging power is a charging power inputted within an effective charging time during which the battery pack is charged from an empty state (for example, an SOC below 5%) to a fully charged state (for example, an SOC above 95%), and the average discharging power is a discharging power outputted within an effective discharging time during which the battery pack is discharged from the fully charged state (for example, the SOC above 95%) to the empty state (for example, the SOC below 5%). The effective charging time is a sum of a time during which the battery pack is in a charged state in a process from the empty state to the fully charged state, and the effective discharging time is a sum of a time during which the battery pack is in a discharged state in a process from the fully charged state to the empty state. For example, if the charging process of the battery pack from the empty state to the fully charged state lasts for 1 hour, the battery pack is charged for 20 minutes until an electric energy reaches Q1, rests for 20 minutes, and then is charged for another 20 minutes until the electric energy is charged from Q1 to the fully charged state Q2. During the entire charging process, the effective charging time of the battery pack is 40 minutes. The average charging power of the battery pack from the empty state to the fully charged state should be an average of average charging powers of the battery pack in different charging periods. In another example, when the charging process of the battery pack is a continuous process, that is, after the battery pack is charged from the empty state, the battery pack is continuously charged to the fully charged state without any pause, the average charging power of the battery pack is a ratio of a charged electric energy to a continuous charging time. Similarly, when the battery pack is discharged from the fully charged state to the empty state for one hour, the battery pack is discharged for 20 minutes, the electric energy is discharged from Q2 to Q3, rests for 20 minutes, and then is discharged for another 20 minutes, the electric energy is discharged from Q3 to the empty state. During the entire charging process, the effective discharging time of the battery pack is 40 minutes. The average discharging power of the battery pack from the fully charged state to the empty state should be an average of average discharging powers of the battery pack in different discharging periods. In another example, when the discharging process of the battery pack is a continuous process, that is, after the battery pack is discharged from the fully charged state, the battery pack is continuously discharged to the empty state without any pause, the average discharging power of the battery pack is a ratio of a discharged electric energy to a continuous discharging time.

In another embodiment, a ratio of the average charging power of the single charging bin to the single battery pack to a discharging rate of the single battery pack to a single electric tool may be in a range of 0.5 to 2. In other words, a ratio of the average charging power to the average discharging power may be 0.5, 0.8, 1, or 2. In this embodiment, when the ratio of the average charging power to the average discharging power is 0.5, one electric tool may be equipped with three battery packs to achieve uninterrupted power supply. When one of the battery packs is used as a working battery pack, the other two battery packs are used as standby battery packs. When the ratio of the average charging power to the average discharging power is 0.8, although the average charging power is slightly less than the average discharging power, the user may not use the electric tool continuously but intermittently, even if the average charging power is slightly less than the average discharging power, the backup battery pack can still be fully charged before the working battery pack is empty.

Preferably, the ratio of the average charging power to the ratio of the average discharging power may be in a range of 1 to 2. Preferably, the ratio of the average charging power to the ratio of the average discharging power may be in a range of 1 to 1.2. When the ratio of the average charging power to the average discharging power is greater than 1, even if the discharging process of the battery pack is continuous, the standby battery pack can still be fully charged before the working battery pack discharged to empty.

As an example, the average charging power of the charging system 4 to the single battery pack may be set to be not less than 2.4 KW. Preferably, the average charging power of the charging system to the single battery pack may be set to be not less than 3 KW. For example, the average charging power of the charging system to the single battery pack may be set to 3 KW, 4 KW, 5 KW, or 6 KW.

Further, since the average charging power of the battery pack is not less than the average discharging power, the effective charging time for charging the battery pack from the empty state to the fully charged state is not greater than the effective discharging time required for discharging the battery pack from the fully charged state to the empty state.

Further, the charging system 4 can support simultaneous charging on a plurality of battery packs. For example, the charging system 4 can support simultaneous charging on two battery packs, and a total charging power of the charging system 4 per unit time can reach more than 6 KW.

As mentioned in Embodiment 2, the charging and discharging rates of the battery pack may be set to be not less than 3C. In this case, if an electric energy of the battery pack is set to 0.6 KWH and the battery pack is charged with a charging power of 3 KW, the battery pack may be quickly charged to the fully charged state within 20 minutes. Further, if a discharging speed of the electric tool is also set to 3 KW, the battery pack may be discharged fastest within 20 minutes. It can be seen that by adopting the foregoing design, the charging speed and discharging speed of the battery pack are equal, so that uninterrupted work of the electric tool system can be achieved by using two groups of battery packs.

Further, when the charging rate of the battery pack is set to be not less than 4C, if the electric energy of the battery pack is set to 0.6 KWH and the battery pack is charged with the charging power of 3 KW, the battery pack may be quickly charged to the fully charged state within 15 minutes. When the charging rate of the battery pack is set to be not less than 5C, if the electric energy of the battery pack is set to 0.6 KWH and the battery pack is charged with the charging power of 3 KW, the battery pack may be quickly charged to the fully charged state within 20 minutes.

The charging system 4 in the embodiment of this application may be designed as a portable charging system (or a mobile charging system). The user can carry the charging system 4 around and charge the battery pack anytime and anywhere.

Referring to FIG. 7 and FIG. 12, in some embodiments, the input interface 44 and the second power conversion portion 45 in FIG. 7 may be integrated together to form an input interface and a power conversion portion 44 shown in FIG. 12. Alternatively, in some embodiments, the output interface 43 and the first power conversion portion 42 in FIG. 7 may be integrated together to form an output interface and a power conversion module 43 shown in FIG. 12. Certainly, in some embodiments, the input interface, the power conversion portion 44, an electric energy storage portion 41, an output interface, and the power conversion module 43 in FIG. 12 may also be integrated together.

It is to be noted that, the foregoing descriptions mainly use wired communication between various components in the charging system 4 through wiring harnesses as an example. However, the embodiments of this application are not limited thereto. Wireless communication may also be performed between various components in the charging system 4 and between the components and the battery packs.

The working system and various components thereof provided in the embodiments of this application are described in detail above with reference to Embodiment 1 to Embodiment 3. For ease of understanding, a specific example of the working system is given below with reference to Embodiment 4.

### Embodiment 4: Specific example of a working system

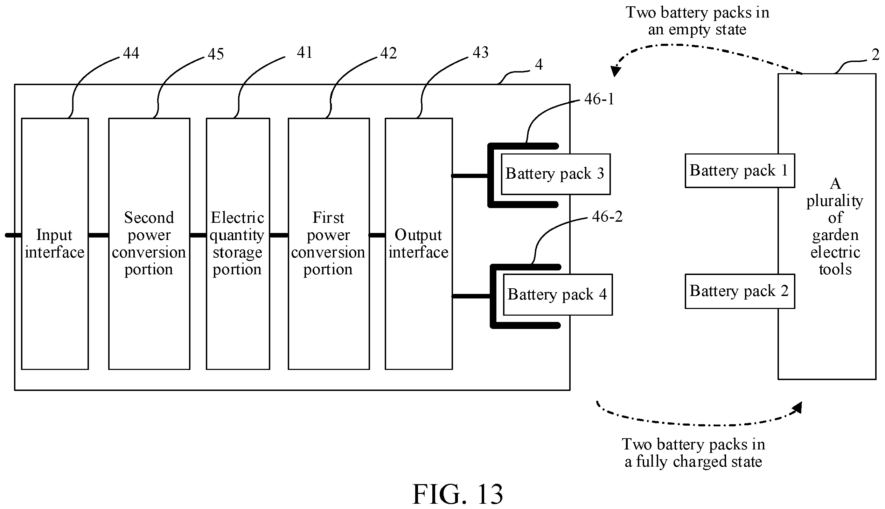

As shown in FIG. 13, the charging system 4 in the working system is an energy storage charging system. The battery pack system in the working system includes 4 battery packs, namely, a battery pack 1, a battery pack 2, a battery pack 3, and a battery pack 4. The battery packs 1 and 2 form one group of battery packs, and the battery packs 3 and 4 form the other group of battery packs. In the working system, the electric tool system 2 includes a plurality of garden electric tools, and the plurality of garden electric tools need to be powered by two battery packs during work.

In the working system, an electric energy of each battery pack in the battery pack system is 0.6 KWH, both a charging rate and a discharging rate are 5C, a rated voltage is 60 V, and a maximum quantity of charging/discharging cycles is not less than 5000.

The charging system 4 is a portable charging system that can be carried around. The electric energy storage portion 41 in the charging system 4 can store an electric energy of 10 KWH. The electric energy of 10 KWH can basically meet an electricity requirement for trimming 10 to 20 gardens a day outside. The electric energy storage portion 41 is a lithium iron phosphate battery. A charging rate and a discharging rate of the battery are both 1C, and a rated voltage is 48 V.

The electric energy storage portion 41 may be charged by using a direct current charging pile or an alternating current charging pile. The charging pile can provide a charging power of 10 KW, thereby enabling the electric energy storage portion 41 to be quickly charged to the fully charged state within one hour.

The charging system 4 includes two DC charging bins, namely, a charging bin 46-1 and a charging bin 46-2. A charging power of a single DC charging bin to a single battery pack is set to 3 KW, so that the battery pack can be quickly charged to the fully charged state within 12 minutes.

A maximum working power of the garden electric tool is set to 3 KW. Therefore, the garden electric tool may discharge the battery pack to the empty state fastest within 12 minutes. Since a charging time of the single battery pack is equal to a minimum discharging time of the single battery pack, it can ensure that charging and discharging processes of the entire working system is uninterrupted.

In the working process, the battery pack 1 and the battery pack 2 may be first used to supply power to the electric tool system 2, after the battery pack 1 and the battery pack 2 are used up, the battery pack 3 and the battery pack 4 may be used to continue to supply power to the electric tool system 2, and the discharged battery pack 3 and battery pack 4 are respectively placed into the charging bin 46-1 and the charging bin 46-2 for charging. Operations are alternately performed in the foregoing manner until one day's gardening work is completed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply system, comprising:
a battery pack system, comprising a plurality of groups of battery packs, configured to alternately supply power to an electric tool system, wherein the electric tool system comprises a plurality of garden electric tools; and
a portable energy storage charging system, wherein the charging system comprises:
an electric energy storage portion, comprising one or more battery cells, wherein the battery cell is configured to store an electric energy;
an input interface, connected to the one or more battery cells, wherein the input interface is configured to receive an input power for charging the battery cell, and the input power is a direct current power or an alternating current power;
a first power conversion portion, electrically connected to the electric energy storage portion and configured to perform power conversion on the electric energy stored in the electric energy storage portion, to output a first charging power;
an output interface, electrically connected to the first power conversion portion and configured to output electric energy at the first charging power; and
a plurality of charging bins, electrically connected to the output interface, wherein the charging bin is configured to place the battery pack, and charge the battery pack by using the electric energy outputted by the output interface, wherein
an average charging power of a single charging bin to a single battery pack is not less than an average discharging power of the single battery pack to the electric tool, the average charging power is a charging power required within an effective charging time during which an electric energy of the battery pack is charged from an empty state to a fully charged state, and the average discharging power is a discharging power required within an effective discharging time during which the electric energy of the battery pack is discharged from the fully charged state to the empty state.

2. The power supply system according to claim 1, wherein the average charging power of the single charging bin to the single battery pack is not less than 2.4 KW; and
preferably, the average charging power of the single charging bin to the single battery pack is not less than 3 KW.

3. The power supply system according to claim 1, wherein the effective charging time required for charging the battery pack from the empty state to the fully charged state is not greater than the effective discharging time required for discharging to the battery pack from the fully charged state to the empty state.

4. The power supply system according to claim 1, wherein a configuration of an internal resistance of a single battery cell of the battery pack enables a maximum continuous charging rate of the battery pack to be not less than a maximum continuous discharging rate of the battery pack.

5. The power supply system according to claim 4, wherein the configuration of the internal resistance of the single battery cell of the battery pack enables the maximum continuous charging rate and/or the maximum continuous discharging rate of the battery pack to be not less than 3C, and a configuration performed by the charging bin on a charging power of the battery pack enables a charging time of the battery pack to be not greater than 20 minutes;
preferably, the configuration of the internal resistance of the single battery cell of the battery pack enables the maximum continuous charging rate and/or the maximum continuous discharging rate of the battery pack to be not less than 4C, and the configuration performed by the charging bin on the charging power of the battery pack enables the charging time of the battery pack to be not greater than 15 minutes; and
preferably, the configuration of the internal resistance of the single battery cell of the battery pack enables the maximum continuous charging rate and/or the maximum continuous discharging rate of the battery pack to be not less than 5C, and the configuration performed by the charging bin on the charging power of the battery pack enables the charging time of the battery pack to be not greater than 12 minutes.

6. The power supply system according to claim 1 or 5, wherein an electric energy carried by the single battery pack is not greater than one eighth of an electric energy storable by the electric energy storage portion.

7. The power supply system according to claim 6, wherein the electric energy storable by the electric energy storage portion is not less than 5 KWH.

8. The power supply system according to claim 6, wherein a capacity of the battery pack is not less than 500 WH.

9. The power supply system according to claim 6, wherein a capacity of the single battery cell of the battery pack is not less than 10 Ah, and a quantity of single battery cells of the battery pack is not greater than 15.

10. The power supply system according to claim 6, wherein a charging rate and a discharging rate of a single battery cell of the electric energy storage portion are respectively less than a charging rate and a discharging rate of the single battery cell of the battery pack.

11. The power supply system according to claim 10, wherein both the charging rate and the discharging rate of the single battery cell of the electric energy storage portion are not greater than 1.5C.

12. The power supply system according to claim 6, wherein a maximum quantity of charging/discharging cycles of the battery pack is not less than 3000; and
preferably, the maximum quantity of charging/discharging cycles of the battery pack is not less than 5000.

13. The power supply system according to claim 1, wherein the charging bin and/or the battery pack further comprise(s) a heating device and/or a heat dissipation device, configured to perform temperature control on the battery pack, to enable the battery pack to be continuously charged or discharged.

14. The power supply system according to claim 1, wherein the plurality of charging bins are configured to charge a battery pack in an idle state in the battery pack system in a working process of the electric tool system, so that before one group of battery packs of the plurality of groups of battery packs completes discharging to the electric tool system, at least one group of battery packs of the plurality of groups of battery packs is charged to the fully charged state.

15. The power supply system according to claim 1, wherein the first power conversion portion is further configured to convert the electric energy stored in the electric energy storage portion into an alternating current power; and the output interface comprises a first alternating current output interface, configured to externally output the alternating current power.

16. The power supply system according to claim 1, wherein the charging system further comprises:
a second power conversion portion, electrically connected to the input interface and configured to convert the input power into a second charging power, to charge the electric energy storage portion.

17. The power supply system according to claim 16, wherein the input interface is configured to receive the input power from one or more of the following devices: a mains socket, a direct current charging pile, an alternating current charging pile, a mobile power supply vehicle, and an energy storage cabinet.

18. The power supply system according to claim 17, wherein a configuration of the electric energy storage portion enables the direct current charging pile and/or the alternating current charging pile to charge the electric energy storage portion from the empty state to the fully charged state within one hour.

19. The power supply system according to claim 1, wherein a direct charging channel is arranged between the input interface and the electric energy storage portion, and the direct charging channel is configured to: when the input power is a direct current power, charge the electric energy storage portion directly by using the direct current power.

20. The power supply system according to claim 1, wherein the charging system further comprises: a second alternating current output interface, configured to: when the input power is an alternating current power, externally output the alternating current power.

21. The power supply system according to claim 20, wherein the second alternating current output interface is configured to charge the battery pack through a charging machine and/or a charger.

22. The power supply system according to claim 1, wherein the first power conversion portion is further configured to convert the electric energy stored in the battery pack into a third charging power, to charge the electric energy storage portion.

23. The power supply system according to claim 1, wherein a maximum charging power of the charging system to the battery pack is greater than a limitation of a mains socket to an electric power.

24. The power supply system according to claim 1, further comprising:
a back bracket, detachably connected to the battery pack.

25. The power supply system according to claim 1, wherein a rated power of the electric tool is greater than or equal to 1 KW and less than or equal to 3 KW.

26. The power supply system according to claim 1, wherein a quantity of battery packs in the battery pack system is equal to twice a quantity of battery packs required when the electric tool system works.

27. A power supply system, comprising:
a battery pack system, comprising a plurality of groups of battery packs, configured to alternately supply power to an electric tool system, wherein the electric tool system comprises a plurality of garden electric tools; and
a portable energy storage charging system, wherein the charging system comprises:
an electric energy storage portion, comprising one or more battery cells, wherein the battery cell is configured to store an electric energy;
an input interface, connected to the one or more battery cells, wherein the input interface is configured to receive an input power for charging the battery cell, and the input power is a direct current power or an alternating current power;
a first power conversion portion, electrically connected to the electric energy storage portion and configured to perform power conversion on the electric energy stored in the electric energy storage portion, to output a first charging power;
an output interface, electrically connected to the first power conversion portion and configured to output electric energy at the first charging power; and
a plurality of charging bins, electrically connected to the output interface, wherein the charging bin is configured to place the battery pack, and charge the battery pack by using the electric energy outputted by the output interface, wherein
a ratio of an average charging power of a single charging bin to a single battery pack to an average discharging power of the single battery pack to the electric tool is in a range of 0.5 to 2, the average charging power is a charging power required within an effective charging time during which an electric energy of the battery pack is charged from an empty state to a fully charged state, and the average discharging power is a discharging power required within an effective discharging time during which an electric energy of the battery pack is discharged from the fully charged state to the empty state.

28. A charging system, comprising:
an electric energy storage portion, comprising one or more battery cells, wherein the battery cell is configured to store an electric energy;
an input interface, connected to the one or more battery cells, wherein the input interface is configured to receive an input power for charging the battery cell, and the input power is a direct current power or an alternating current power;
a first power conversion portion, electrically connected to the electric energy storage portion and configured to perform power conversion on the electric energy stored in the electric energy storage portion, to output a first charging power;
an output interface, electrically connected to the first power conversion portion and configured to output electric energy at the first charging power; and
at least one charging bins, electrically connected to the output interface, wherein the charging bin is configured to place the battery pack, and charge the battery pack by using the electric energy outputted by the output interface, wherein
the average charging power of the charging bin to the battery pack is not less than 2.4 KW.

29. The charging system according to claim 28, wherein the average charging power of the charging bin to the battery pack is not less than 3 KW.

30. A working system, comprising:
an electric tool system; and
the power supply system according to any one of claims 1 to 29.

31. A working method, comprising:
trimming a first garden by using a plurality of garden electric tools, wherein the plurality of garden electric tools are powered by a first group of battery packs in a process of trimming the first garden;
trimming, after completing trimming the first garden, a second garden by using the plurality of garden electric tools, wherein the plurality of garden electric tools are powered by a second group of battery packs in a process of trimming the second garden; and
charging the first group of battery packs by using a charging system, so that before trimming on the second garden is completed, the first group of battery packs is charged to a fully charged state, wherein an average charging power of the charging system to the battery pack is not less than an average discharging power of the battery pack to the electric tool.

32. The working method according to claim 31, wherein the charging system is an energy storage charging system, and an electric energy stored in the charging system is configured for supporting the plurality of garden electric tools in completing trimming 10 to 20 gardens.
